(19) Europäisches Patentamt / European Patent Office / Office européen des brevets

(11) **EP 3 188 426 B1**

(12) **FASCICULE DE BREVET EUROPEEN**

(45) Date de publication et mention
de la délivrance du brevet:
**27.06.2018 Bulletin 2018/26**

(21) Numéro de dépôt: **16206565.0**

(22) Date de dépôt: **23.12.2016**

(51) Int Cl.:
*H04L 25/02* *(2006.01)*     *H04L 25/03* *(2006.01)*

(54) **PROCEDE DE LUTTE ANTI-INTERFERENCE ADAPTATIF DANS UN RECEPTEUR MULTI-VOIES**

ADAPTIVES VERFAHREN ZUR ANWENDUNG VON ENTSTÖRUNGSMASSNAHMEN IN EINEM MEHRWEG-EMPFÄNGER

METHOD FOR CONTROLLING ADAPTIVE INTERFERENCE IN A MULTI-CHANNEL RECEIVER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.12.2015 FR 1502720**

(43) Date de publication de la demande:
**05.07.2017 Bulletin 2017/27**

(73) Titulaire: **Thales**
**92400 Courbevoie (FR)**

(72) Inventeurs:
• **PIPON, François**
**92622 Gennevilliers Cedex (FR)**
• **BRUGIER, Jérémy**
**92622 Gennevilliers Cedex (FR)**
• **CIPRIANO, Antonio**
**92622 Gennevilliers Cedex (FR)**

(74) Mandataire: **Priori, Enrico**
**Marks & Clerk France**
**Conseils en Propriété Industrielle**
**Immeuble «Visium»**
**22, avenue Aristide Briand**
**94117 Arcueil Cedex (FR)**

(56) Documents cités:
**WO-A1-97/08849     WO-A1-2012/093333**
**CA-A1- 2 240 483**

• **HANAKI A ET AL: "Signal space whitening MLSE with a multibeam adaptive array", VEHICULAR TECHNOLOGY CONFERENCE, 2000. IEEE VTS FALL VTC 2000. 52ND SEPT. 24-28, 2000, PISCATAWAY, NJ, USA,IEEE, vol. 1, 24 septembre 2000 (2000-09-24), pages 406-411, XP010525197, ISBN: 978-0-7803-6507-0**

**Description**

L'invention se situe dans le domaine du traitement d'antenne, et concerne un procédé de réception dans un récepteur multivoies, ainsi qu'un récepteur mettant en oeuvre le procédé. L'invention s'applique aux radiocommunications, en particulier les radiocommunications militaires, quelle que soit la configuration (sol-sol, sol-air ou air-air), sans limitations d'emploi concernant la bande de fréquence, et particulièrement dans la bande HF (acronyme pour Hautes Fréquences), UHF (acronyme pour Ultra Hautes Fréquences), ou la bande C (de 4GHz à 8GHz). Elle s'applique en particulier aux transmissions radios pour lesquelles un signal est reçu en présence d'interférences, qu'elles soient intentionnelles ou non.

Lors de la propagation d'un signal radioélectrique, issu de la modulation en phase, en fréquence et/ou en amplitude d'une porteuse par une suite de symboles, celui-ci se trouve soumis à plusieurs sources de dégradations.

Parmi ces sources de dégradations, se trouve le bruit intrinsèque au récepteur, qui peut être modélisé comme un Bruit Blanc Gaussien. Lorsque le signal est reçu sur plusieurs capteurs, le bruit est supposé blanc spatialement (indépendance entre les capteurs) et la matrice de corrélation du bruit peut s'écrire $R = \text{diag}(\sigma_k^2)$ où $\sigma_k^2$ est la puissance de bruit reçue sur le capteur $k$. Dans la suite du document, ce bruit est dit Blanc Spatialement et Temporellement.

Parmi ces sources de dégradations se trouvent également les trajets liés aux réflexions multiples de l'onde électromagnétique lors de sa propagation. Ces multi-trajets sont dus aux réflexions sur les divers éléments de l'environnement, comme les bâtiments ou le relief terrestre, mais peuvent également provenir, comme c'est souvent le cas lorsque l'on traite de transmissions HF (acronyme pour Hautes Fréquences), de réflexions sur les différentes couches ionosphériques de l'atmosphère. Ces réflexions génèrent des répliques du signal, décalées en temps, en phase et/ou en amplitude. Lorsque les multi-trajets sont reçus dans un intervalle de temps inférieur à la durée d'un symbole, ils peuvent se sommer de manière constructive ou destructive. On parle alors de fading plat (en anglais flat fading), qui requiert, afin d'améliorer la qualité de la réception, la mise en oeuvre de techniques permettant d'apporter de la diversité : diversité temporelle en cas de mobilité, obtenue par le biais d'un entrelacement et d'un codage des données sur une durée plus importante que le temps de cohérence du canal de propagation, diversité fréquentielle obtenue par le biais d'un mécanisme de saut de fréquence et de codage des données, ou diversité spatiale obtenue par l'utilisation d'une pluralité d'antennes d'émission et/ou de réception judicieusement espacées. Lorsque les multi-trajets sont reçus dans un intervalle de temps supérieur à la durée d'un symbole, ils génèrent des interférences inter-symboles qui viennent dégrader la qualité de la liaison radio : on parle alors de fading sélectif (en anglais selective fading). Pour remédier à ce problème, il est alors nécessaire d'avoir recours à des techniques de codage canal, afin d'améliorer la robustesse du signal, des techniques d'égalisation, cherchant à estimer le canal de propagation et à recombiner en temps et en phase les différents trajets, ou à des techniques de traitement d'antenne visant à optimiser la réception des différents trajets utiles en recombinant de façon efficace les signaux issus des différentes antennes de réception.

Enfin, parmi ces sources de dégradations, se trouvent les interférences liées au brouillage, qu'il soit volontaire (brouillage intentionnel large bande par exemple) ou involontaire (autres signaux transmis dans la même ressource fréquentielle). Des traitements spécifiques à la lutte contre le brouillage sont alors nécessaires, comme le codage correcteur d'erreur, l'excision de brouilleurs par filtrage à encoches, l'évasion de fréquence ou les techniques de traitement d'antenne qui visent, en recombinant judicieusement les signaux reçus sur un réseau de capteurs, à éliminer l'influence des interférences tout en optimisant la réception du signal utile.

Parmi l'ensemble des techniques permettant de lutter contre les différentes sources de dégradations affectant la réception d'un signal utile, les techniques de traitement d'antenne sont les plus prometteuses, puisqu'elles permettent, par un traitement des signaux reçus sur les différentes antennes d'un réseau, d'optimiser la réception du signal utile en présence de fading plat, de fading sélectif et d'interférences.

Pour mettre en oeuvre la plupart des traitements mentionnés ci-dessus, il est habituel d'insérer dans le signal transmis des séquences connues par le récepteur, dites séquences d'apprentissage, qui permettent d'estimer le canal de propagation ou les interférences en présence. Ces séquences sont répétées de manière périodique, permettant ainsi le suivi des variations des caractéristiques du canal de transmission.

Les traitements monovoie, ou SISO (acronyme anglais pour Single Input Single Output), présentent leurs limites dès lors que le niveau des interférences devient trop important ou que les conditions de propagation sont trop complexes (fading plat alors que la bande de cohérence du canal est supérieure à la bande de saut de fréquence, fading sélectif dont l'étalement des trajets est trop important pour pouvoir être égalisé, interférences large bande, etc.). Il est alors nécessaire de les combiner avec des traitements multivoies, l'exploitation de la diversité spatiale apportée par l'utilisation de plusieurs antennes permettant de tirer profit de la différence entre les canaux de transmission relatifs à chaque antenne.

Parmi les traitements multivoies, on distingue les traitements pour lesquels la diversité d'antenne est apportée à l'émission, appelés traitements MISO (acronyme anglais pour Multiple Input Single Output), les traitements pour lesquels la diversité d'antenne est apportée à la réception, appelés traitements SIMO (acronyme anglais pour Single Input Multiple Output), et les traitements pour lesquels la diversité d'antenne est apportée à la fois à l'émission et à la réception, appelés traitements MIMO (acronyme anglais pour Multiple Input Multiple Output).

L'invention s'applique au cas de traitements SIMO.

En l'absence d'interférence, différents récepteurs peuvent être envisagés en fonction des caractéristiques du canal de propagation utile. Lorsque le fading est « plat » (absence d'interférence entre symboles), le traitement optimal est le traitement dit de MRC (acronyme anglais pour Maximal Ratio-Combining, ou combinaison à rapport maximal).

Dans un poste de réception multivoies MRC, les signaux issus des différentes voies de réception sont recombinés en phase et en amplitude (suivant la puissance du signal), de manière à maximiser le rapport signal à bruit (en anglais Signal over Noise Ratio, ou SNR) du signal utile. Ainsi, en présence d'un bruit blanc spatialement et temporellement (c'est-à-dire en l'absence d'interférence), et pour un fading plat (absence d'interférences entre symboles), le traitement de MRC permet une exploitation optimale de la diversité spatiale.

Plus précisément, lorsque le fading est plat, le vecteur signal reçu sur le réseau de capteurs s'écrit :

$$\boldsymbol{x}(n) = \boldsymbol{h}\,s(n) + \boldsymbol{b}(n) \qquad (1)$$

où $s(n)$ est le signal émis à l'échantillon n, $\boldsymbol{h}$ est le vecteur canal de propagation et $\boldsymbol{b}(n)$ est le vecteur bruit de réception.

Le signal en sortie de recombinaison MRC s'écrit alors :

$$y(n) = \frac{\sum \dfrac{h_i^* x_i(n)}{\sigma_i^2}}{\sum \dfrac{|h_i|^2}{\sigma_i^2}}, \qquad (2)$$

où $\sigma_i^2$ est la puissance de bruit reçue sur le capteur i.

Lorsque le fading est « sélectif » (présence d'interférences entre symboles), ce récepteur voit ses performances se dégrader et la mise en oeuvre d'une égalisation multivoies est nécessaire. Plusieurs solutions d'égalisation multivoies ont été proposées dans la littérature.

Lorsqu'elles sont conçues pour fonctionner dans des environnements non brouillés, c'est-à-dire dans lesquels le bruit présent sur chacune des voies est blanc temporellement, et non corrélé entre les voies (soit blanc spatialement), ces solutions d'égalisation sont dites « non anti-brouillées ».

Parmi ces techniques, la solution optimale au sens du maximum de vraisemblance est le récepteur basé sur le Filtre Adapté Spatio-Temporel en Bruit Blanc Spatialement et Temporellement (FAST-BBST) suivi d'un organe de décision basé sur un algorithme de Viterbi. Le FAST-BBST consiste à effectuer une estimation du canal de propagation, puis un filtrage adapté au canal sur chacune des voies de réception et à sommer les signaux obtenus en sortie des filtres adaptés. En sortie de FAST-BBST, le rapport signal à bruit est maximisé sur le symbole courant et l'interférence entre symboles résiduelle est traitée par un algorithme de Viterbi.

Le principal inconvénient de ce récepteur, qui est optimal en absence d'interférence, que le fading soit sélectif ou qu'il soit plat, est que l'algorithme de Viterbi requiert une puissance de calcul qui croît en $M^L$, où $M$ est l'ordre de la constellation et $L$ la taille du canal. Ainsi, ce récepteur peut être mis en oeuvre sur des formes d'onde comme le GSM (acronyme anglais pour Global System for Mobile communications, ou groupe spécial mobile), pour lequel $M$=2 et $L$=5, mais pas sur des formes d'ondes plus récentes, pour lesquelles la bande de modulation est plus importante et où les constellations sont d'ordre plus élevées. Une alternative à l'algorithme de Viterbi, moins coûteuse en puissance de calcul, est de mettre en oeuvre un égaliseur monovoie en sortie du FAST-BBST. L'égaliseur monovoie peut être n'importe quel autre type d'égaliseur connu de l'homme du métier, comme par exemple un égaliseur DFE (acronyme anglais pour Decision Feedback Equalizer), BDFE (acronyme anglais pour Block-DFE), ou un égaliseur transverse.

Une alternative aux solutions basées sur le FAST-BBST est constituée par les solutions de type MRC après égalisation.

Dans ces solutions, une égalisation monovoie est effectuée sur chaque voie de réception de façon indépendante, puis les symboles estimés (donc non décidés) en sortie de chaque égaliseur sont recombinés en fonction du SNR estimé en sortie de chaque égaliseur.

Ce traitement MRC est « quasi » optimal en l'absence d'interférence (le « quasi » provenant de ce que le filtre spatio-temporel équivalent mis en oeuvre par cette solution est différent du filtre optimal constitué par le FAST-BBST), que le fading soit sélectif ou non, et peut être adapté à la lutte contre les brouilleurs à bande étroite lorsqu'il est associé à une technique de filtrage à encoches sur chacun des égaliseurs monovoie disposés sur chacune des voies de réception.

Cependant, les performances de telles méthodes d'égalisation multivoies non anti-brouillés ne sont plus satisfaisantes dès lors que les interférences ne sont pas des interférences bande étroite. La mise en oeuvre d'autres types de traitements SIMO est alors nécessaire.

Pour permettre un fonctionnement dans un environnement brouillé, pour lequel le bruit reçu sur les différentes voies n'est plus blanc spatialement, sont connues des méthodes d'égalisation multivoies dites « anti-brouillées », c'est-à-dire des méthodes intégrant des techniques de lutte contre les interférences liées au brouillage et les bruits non blancs spatialement. Ces méthodes sont également connues sous le nom de techniques de filtrage d'antenne (dans cette dénomination, une antenne est composée de plusieurs antennes élémentaires et le filtrage d'antenne vise à recombiner les signaux issus de ces différentes antennes élémentaires de façon à optimiser la réception du signal utile en présence d'interférences), ou encore d'antenne adaptative (pour souligner le fait que les traitements sont capables de s'adapter automatiquement aux évolutions des conditions de propagation et d'interférence).

Ces techniques ont été développées à partir des années 60. Dans un premier temps, elles étaient basées sur un filtrage spatial (donc sans notion d'égalisation) des signaux reçus, c'est-à-dire avec une pondération amplitude/phase sur chaque capteur. Puis à partir des années 80/90, des structures spatio-temporelles, permettant une véritable égalisation multivoies des signaux reçus, ont été proposées, afin de suivre l'évolution des formes d'onde, et l'augmentation des largeurs de bande des modulations.

On peut citer à cet effet le brevet Européen EP 0669729 B1, qui décrit un procédé réalisant :

- un prétraitement préalable de décorrélation spatiale entre la composante bruit de fond plus interférences et le signal reçu, permettant de supprimer une partie des interférences. Cette décorrélation nécessite l'estimation, pour chacune des voies, du canal de propagation et des échantillons de bruit total (bruit plus interférences) sur des séquences d'apprentissage, puis le calcul de la matrice de corrélation du bruit total R associée,
- la mise en oeuvre d'un traitement d'égalisation multivoies non anti-brouillé :

    • estimation, pour chacune des voies, du canal de propagation et du bruit résiduel sur le signal prétraité,
    • filtrage de chacune des voies par le filtre temporel adapté au canal dépendant de l'estimée du canal de propagation calculée, de manière à optimiser le rapport signal à bruit obtenu sur le symbole courant,
    • recombinaison entre les différentes voies, et
    • égalisation du signal après recombinaison, l'égalisation pouvant être réalisée par un algorithme de Viterbi, si la puissance de calcul le permet, ou par tout autre égaliseur monovoie.

Le procédé décrit dans ce brevet est particulièrement intéressant puisqu'il est optimal lorsque le bruit est blanc temporellement mais non nécessairement blanc spatialement (bruit de fond blanc temporellement et interférence(s) blanches temporellement, à un seul trajet de propagation). Cependant, il pose le problème de la puissance de calcul nécessaire pour sa mise en oeuvre.

Le brevet Européen EP 0867079 B1 vise à diminuer cette complexité de mise en oeuvre. Cette fois-ci, le brevet cherche à estimer un vecteur w composé d'un coefficient par voie et utilisé lors d'une étape de traitement d'antenne et de recombinaison des voies, conjointement avec un vecteur **h** d'estimée du canal de propagation associé au signal recombiné. Les vecteurs sont calculés de manière à minimiser l'erreur quadratique moyenne sur les séquences d'apprentissage. Le filtrage spatial par **w** est suivi d'une étape d'égalisation monovoie. L'ensemble des calculs vise à pointer la direction du filtre spatial en direction du trajet principal dans le cas d'un canal de propagation multi-trajets. La réception du trajet principal est donc optimisée, cependant, dans le cas d'un canal de propagation multi-trajets du signal utile, le procédé ne tire pas entièrement partie des trajets secondaires. La solution n'est donc pas optimale lorsque le canal de propagation est un canal multi-trajets, la puissance apportée par les trajets supplémentaires étant exploitée de manière sous-optimale. La demande de brevet WO97/08849 décrit un procédé de réception et d'égalisation antibrouillée d'un signal dans un récepteur multivoies, ledit signal comprenant au moins une séquence d'apprentissage formée de symboles connus et au moins une séquence de données utiles formée de symboles inconnus, le procédé comprenant les étapes de :

- réception dudit signal sur une pluralité de voies du récepteur, transposition et discrétisation du signal multivoies en un signal multivoies équivalent bande de base discrétisé,
- synchronisation du signal multivoies bande de base discrétisé,
- calcul d'une réponse impulsionnelle dans le domaine fréquentiel du canal multivoies et d'une matrice R de corrélation du bruit et des interférences, à partir d'au moins une partie correspondant à une séquence d'apprentissage dudit signal multivoies synchronisé.

Le brevet Français FR 2758926 ajoute une dimension temporelle au filtrage spatial du brevet précédent. Dans ce brevet, une matrice multicapteurs R de corrélation spatiale du bruit de fond plus interférences est construite suivant le même procédé que dans le brevet EP 0669729 B1 cité précédemment. Dans ce brevet, le filtrage spatio-temporel des différentes voies du récepteur est réalisé directement en utilisant la matrice $W = [\hat{\boldsymbol{w}}(0), \hat{\boldsymbol{w}}(1), .., \hat{\boldsymbol{w}}(L - 1)] = R^{-1}[h(0), h(1), ..., h(L - 1)]$, $\boldsymbol{h}(n)$ la composante d'indice $n$ de la matrice de canal multicapteurs, sans effectuer le prétraitement préalable de décorrélation spatiale entre la composante bruit de fond plus interférences et le signal reçu réalisé dans le brevet EP 0669729 B1. Ce récepteur est optimal lorsque le bruit total est blanc temporellement. Sur le signal monodimensionnel obtenu à l'issue de ce filtrage spatio-temporel, les différents trajets utiles présents sur les différentes voies ont été recombinés en phase sur le symbole courant. Les interférences liées aux brouilleurs et aux trajets utiles en dehors de la fenêtre d'égalisation sont éliminées, mais les interférences entre symboles liées aux différents trajets compris dans la fenêtre de l'égaliseur sont toujours présentes. C'est la raison pour laquelle le filtrage spatio-temporel est suivi d'une étape complémentaire d'égalisation monovoie du signal obtenu par sommation des différentes voies. L'égalisation peut être réalisée par l'algorithme de Viterbi, si la puissance de calcul le permet, ou par tout autre égaliseur monovoie.

La solution apportée par cette demande de brevet est adaptée au problème de la rejection des brouilleurs et à l'exploitation de l'ensemble des trajets dans la fenêtre d'un l'égaliseur. Cependant, elle est assez complexe à implémenter.

L'invention se propose d'améliorer le procédé d'égalisation multivoie anti-brouillé décrit dans le brevet précédent, en proposant un procédé d'égalisation multivoies réalisé dans le domaine fréquentiel, permettant ainsi de réduire la complexité des calculs requis tout en conservant les propriétés recherchées de rejection des brouilleurs et d'exploitation des trajets situés dans la fenêtre de l'égaliseur. Dans le procédé d'égalisation multivoies selon l'invention, le calcul de la matrice R de corrélation du bruit et des brouilleur peut être réalisé de différentes manières, plus ou moins avantageuses en termes de complexité.

A cet effet, l'invention porte sur un procédé de réception et d'égalisation antibrouillée d'un signal dans un récepteur multivoies. Le signal reçu comprend au moins une séquence d'apprentissage formée de symboles connus et au moins une séquence de données utiles formée de symboles inconnus. Le procédé objet de l'invention comprend les étapes de :

- réception du signal sur une pluralité de voies du récepteur, transposition et discrétisation du signal multivoies reçu sur les voies du récepteur, en un signal multivoies équivalent bande de base discrétisé,

- synchronisation du signal multivoies bande de base discrétisé,

- calcul d'une réponse impulsionnelle dans le domaine fréquentiel du canal multivoies $\hat{\boldsymbol{h}}(f)$ et d'une matrice $\hat{R}$ de corrélation du bruit et des interférences, à partir d'au moins une partie correspondant à une séquence d'apprentissage dudit signal multivoies synchronisé,

- transposition dans le domaine fréquentiel d'au moins une partie correspondant à une séquence de données utiles du signal multivoies synchronisé, et filtrage par le vecteur $\boldsymbol{w}(f)$, avec

$$\boldsymbol{w}(f) = \frac{\hat{R}^{-1}\hat{\boldsymbol{h}}(f)}{1 + \hat{\boldsymbol{h}}(f)^H \hat{R}^{-1}\hat{\boldsymbol{h}}(f)},$$

- le signal résultant dudit filtrage étant un signal monovoie dans le domaine fréquentiel, et

- transposition dans le domaine temporel dudit signal monovoie.

Le procédé selon l'invention permet d'estimer les symboles transmis, et comprend la rejection d'interférences. En cela, il s'agit bien d'un procédé d'égalisation multivoies anti-brouillé.

Selon un mode de réalisation du procédé de réception et d'égalisation antibrouillée de l'invention, le calcul de la réponse impulsionnelle dans le domaine fréquentiel du canal multivoies $\hat{\boldsymbol{h}}(f)$ se fait dans le domaine temporel. Il comprend les étapes de :

- calcul d'une matrice d'intercorrélation $\hat{R}_{DX}$ entre une séquence d'apprentissage et une partie correspondant à ladite séquence d'apprentissage du signal multivoies synchronisé,

- calcul d'une matrice d'autocorrélation $\hat{R}_{XX}$ de ladite partie correspondant à une séquence d'apprentissage dudit signal multivoies synchronisé,

- calcul d'une matrice $\hat{H}$ de canal multicapteurs à partir de la matrice $\hat{R}_{DX}$ et d'une matrice d'autocorrélation $R_{DD}$ de ladite séquence d'apprentissage :
$\hat{H} = \hat{R}_{DX}{}^H R_{DD}{}^{-1}$, avec $^H$ l'opérateur transposé-conjugué, et

- calcul de la réponse impulsionnelle dans le domaine fréquentiel du canal multivoies $\hat{\boldsymbol{h}}(f)$ par voie du récepteur, par transformée de Fourier effectuée sur des vecteurs $\hat{h}_k(n)$ formant des colonnes de la matrice $\hat{H}$.

Dans ce mode de réalisation, la matrice R de corrélation du bruit et des interférences est obtenue par la formule :

$$\hat{R} = \hat{R}_{XX} - \hat{H}\hat{R}_{DX}.$$

Les matrices $R_{DD}$, $\hat{R}_{DX}$ et $\hat{R}_{XX}$ sont elles calculées à partir des formules suivantes :

$$R_{DD} = \frac{1}{P - L + 1} \sum_{n=L-1}^{P-1} \boldsymbol{d}(n)\boldsymbol{d}(n)^H,$$

$$\hat{R}_{DX} = \frac{1}{P - L + 1} \sum_{n=L-1}^{P-1} \boldsymbol{d}(n)\boldsymbol{x}(n)^H,$$

$$\hat{R}_{XX} = \frac{1}{P - L + 1} \sum_{n=L-1}^{P-1} \boldsymbol{x}(n)\boldsymbol{x}(n)^H,$$

où

- $\boldsymbol{d}(n)$ est un vecteur formé à partir des symboles d'une séquence d'apprentissage,

- $\boldsymbol{x}(n)$ est un vecteur formé à partir des symboles reçus dans une partie correspondant à la séquence d'apprentissage $\boldsymbol{d}(n)$ dudit signal multivoies synchronisé,

- P est le nombre de symboles de ladite séquence d'apprentissage $\boldsymbol{d}(n)$,

- $L$ est une longueur d'une fenêtre d'égalisation.

Selon un autre mode de réalisation du procédé de réception et d'égalisation antibrouillée de l'invention, le calcul de la réponse impulsionnelle dans le domaine fréquentiel du canal multivoies $\hat{\boldsymbol{h}}(f)$ est réalisé à partir des données transposées dans le domaine fréquentiel. Il comprend les étapes de :

- estimation de la réponse impulsionnelle temporelle du canal de propagation $\hat{h}_k(n)$ pour chaque voie $k$ du récepteur, à partir d'au moins une séquence d'apprentissage et d'au moins une partie correspondant à la ou les dites séquences d'apprentissage du signal multivoies synchronisé, transposées dans le domaine fréquentiel,

- réduction du bruit des réponses impulsionnelles temporelles du canal de propagation $\hat{h}_k(n)$ pour chaque voie $k$ du récepteur, par mise à zéro des valeurs de $\hat{h}_k(n)$ associées à des positions pour lesquelles le signal ne peut être égalisé,

- calcul des vecteurs $\hat{\boldsymbol{h}}(f)$ par interpolation fréquentielle des $\hat{h}_k(n)$.

Dans ce mode de réalisation, le calcul de la matrice $\hat{R}$ de corrélation du bruit et des interférences peut être réalisé à travers les étapes de :

- détermination, dans les réponses impulsionnelles temporelles $\hat{h}_k(n)$ estimées, des positions $I_b$ des échantillons correspondant à du bruit, et génération des vecteurs $\hat{b}_k(n) = \hat{h}_k(n)$ pour $n$ appartenant à $I_b$,

- calcul des vecteurs bruit $\hat{\boldsymbol{b}}(n)$ à partir des $\hat{b}_k(n)$, et

- calcul de la matrice $\hat{R}$ :

$$\hat{R} = \sum_{n \in I_b} \widehat{\boldsymbol{b}}(n) \widehat{\boldsymbol{b}}(n)^H.$$

Avantageusement, lorsque le signal comprend une pluralité séquences d'apprentissage, la détermination de la réponse impulsionnelle temporelle pour chaque voie $k$ du récepteur multivoies est réalisé pour $N_{TS}$ séquences d'apprentissage. $\hat{h}_{k,i}(n)$ désigne alors la réponse impulsionnelle temporelle estimée pour la voie $k$ à partir de la séquence d'apprentissage $i$. Dans ce mode de réalisation, le calcul de la matrice $\hat{R}$ de corrélation du bruit et des interférences comprend les étapes de :

- détermination, dans les réponses impulsionnelles temporelles $\hat{h}_{k,i}(n)$ estimées, des positions $I_u$ des échantillons correspondant à du signal utile, et des positions $I_b$ des échantillons correspondant à du bruit, et génération des vecteurs $\hat{u}_{k,i}(n) = \hat{h}_{k,i}(n)$ pour $n$ appartenant à $I_u$, et des vecteurs $\hat{b}_{k,i}(n) = \hat{h}_{k,i}(n)$ pour $n$ appartenant à $I_b$,

- calcul des vecteurs signal utile $\hat{\boldsymbol{u}}_i(n)$ à partir des $\hat{u}_{k,i}(n)$, et des vecteurs bruit $\hat{\boldsymbol{b}}_i(n)$ à partir des $\hat{b}_{k,i}(n)$,

- estimation d'une matrice $\hat{R}_{XX}$ de corrélation du signal total, avec

$$\hat{R}_{XX} = \frac{1}{N_{TS}} \sum_{i=0}^{N_{TS}-1} \left( \sum_{n \in I_u} \widehat{\boldsymbol{u}_i}(n) \widehat{\boldsymbol{u}_i}(n)^H + \sum_{n \in I_b} \widehat{\boldsymbol{b}_i}(n) \widehat{\boldsymbol{b}_i}(n)^H \right)$$

- estimation du vecteur signal utile moyen :

$$\widehat{\boldsymbol{u}_m}(n) = \frac{1}{N_{TS}} \sum_{i=0}^{N_{TS}-1} \widehat{\boldsymbol{u}_i}(n),$$

- estimation d'une matrice $\hat{R}_{SS}$ de corrélation du signal utile reçu :

$$\hat{R}_{SS} = \sum_{n \in I_u} \widehat{\boldsymbol{u}_m}(n) \widehat{\boldsymbol{u}_m}(n)^H,$$

- calcul de la matrice $\hat{R}$ :

$$\hat{R} = \frac{1}{L_{TS}} \left( \hat{R}_{XX} - \hat{R}_{SS} \right).$$

Enfin, l'invention porte sur un récepteur multivoies permettant la réception et l'égalisation antibrouillée d'un signal comprenant au moins une séquence d'apprentissage formée de symboles connus et au moins une séquence de données utiles formée de symboles inconnus. Le récepteur selon l'invention est configuré pour réaliser la réception du signal sur chacune de ses voies, transposer et discrétiser le signal multivoies en un signal multivoies équivalent bande de base discrétisé. Il comprend également au moins un équipement de traitement du signal configuré pour mettre en oeuvre un procédé de réception et d'égalisation antibrouillée en exécutant les étapes de :

- synchronisation du signal multivoies bande de base discrétisé,

- calcul d'une réponse impulsionnelle dans le domaine fréquentiel du canal multivoies $\hat{\boldsymbol{h}}(f)$ et d'une matrice $\hat{R}$ de corrélation du bruit et des interférences, à partir d'au moins une partie correspondant à une séquence d'apprentissage dudit signal multivoies synchronisé,

- transposition dans le domaine fréquentiel d'au moins une partie correspondant à une séquence de données utiles du signal multivoies synchronisé, et filtrage par le vecteur $\boldsymbol{w}(f)$, avec

$$\boldsymbol{w}(f) = \frac{\hat{R}^{-1}\widehat{\boldsymbol{h}}(f)}{1 + \widehat{\boldsymbol{h}}(f)^H \hat{R}^{-1}\widehat{\boldsymbol{h}}(f)},$$

- le signal résultant dudit filtrage étant un signal monovoie dans le domaine fréquentiel, et

- transposition dans le domaine temporel dudit signal monovoie.

**_Description_**

L'invention sera mieux comprise et d'autres caractéristiques et avantages apparaîtront mieux à la lecture de la description qui suit, donnée à titre non limitatif, et grâce aux figures annexées parmi lesquelles :

- la figure 1a présente une structure de trame permettant de mettre en oeuvre l'invention, connue de l'homme du métier,

- la figure 1b présente un récepteur multivoies dans lequel est mis en oeuvre le procédé de réception selon l'invention,

- la figure 2a présente une structure de trame correspondant à une forme d'onde monoporteuse conçue de manière à pouvoir être égalisée dans le domaine fréquentiel,

- la figure 2b présente une structure de trame correspondant à une forme d'onde monoporteuse conçue de manière à pouvoir être égalisée dans le domaine fréquentiel, dans laquelle les séquences de données utiles comprennent un suffixe cyclique,

- la figure 2c représente la réalisation du traitement d'égalisation multivoies anti-brouillé mis en oeuvre dans le domaine fréquentiel selon l'invention,

- la figure 2d représente la structure des séquences d'apprentissages dans les trames permettant la mise en oeuvre d'un mode de réalisation de l'invention,

- Les figures 3a et 3b illustrent les transformations apportées à l'estimée de la réponse impulsionnelle dans le domaine temporel lors de la mise en oeuvre d'un des modes de réalisation de l'invention,

- la figure 4 présente les différentes étapes du procédé d'égalisation multivoies antibrouillée selon l'invention.

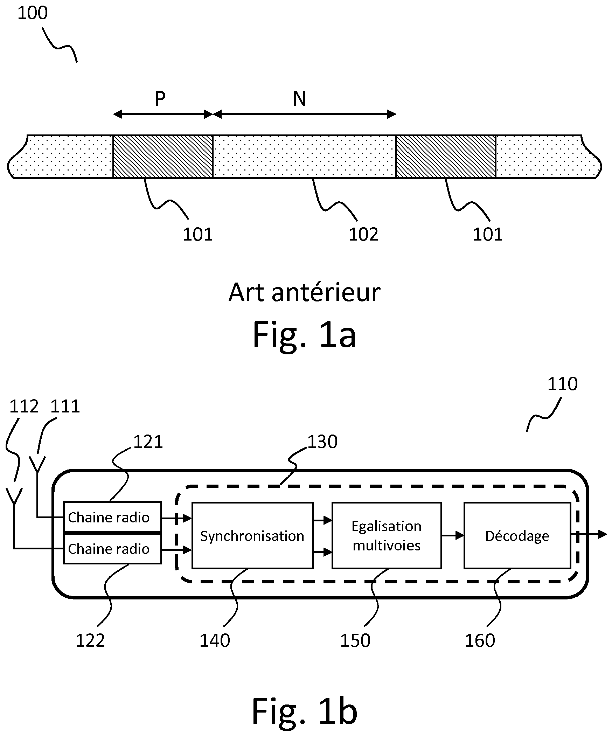

La figure 1a présente la structure de trame 100 d'un signal monoporteuse destiné à être égalisé, indépendamment de la modulation utilisée pour sa transmission. Cette structure comprend des séquences d'apprentissage 101, constituées de symboles de référence connus par l'émetteur et le récepteur, transmises en alternance avec des séquences de données utiles 102, constituées de symboles utiles, ou symboles d'information. Cette structure de trame est commune à la plupart des standards de communication monoporteuses et multiporteuses actuels. On citera à titre d'exemple le standard GSM (acronyme anglais pour Global System for Mobile Communications), le standard 3G (3ème génération), le standard LTE (acronyme anglais pour Long Term Evolution, ou 4G), les différents standards DVB (acronyme anglais pour Digital Video Broadcasting), et beaucoup d'autres.

Les séquences d'apprentissage ont pour but de permettre la synchronisation temporelle et fréquentielle du récepteur, ainsi que l'estimation du canal de propagation en vue de sa compensation par le biais d'un égaliseur ou de toute autre technique adaptée. Leurs positions dans la trame sont connues du récepteur.

La longueur des séquences d'apprentissage, et leur répartition au sein du signal transmis, dépend des contraintes de mise en oeuvre de la forme d'onde (comme par exemple la longueur des trames, la vitesse maximale de déplacement, le type de canal de propagation, ...). Dans la suite du document, on considèrera que les séquences d'apprentissage sont de tailles identiques valant $P$ symboles, et que les séquences de données sont de tailles identiques valant $N$ symboles. L'invention s'applique de manière identique lorsque les tailles des séquences d'apprentissage et des séquences de données varient, ou lorsque les séquences d'apprentissage ne sont pas toutes identiques.

La figure 1b présente un récepteur multivoies dans lequel est mise en oeuvre le procédé de réception selon l'invention.

Le récepteur 110 comprend au moins deux antennes (ou capteurs) 111 et 112, destinées à recevoir un signal. Chacune des antennes est le point d'entrée de l'une des voies du récepteur. Il comprend également une chaine radio 121 et 122 par voie, dont l'objet est de transformer le signal analogique reçu sur fréquence porteuse en un signal bande de base discrétisé. Pour ceci, la chaîne radio met en oeuvre de moyens de conversion de la fréquence porteuse du signal. Un mode de réalisation classique consiste à transposer le signal d'abord en fréquence intermédiaire, puis à le transformer en des signaux discrets équivalents en bande de base par l'intermédiaire d'un oscillateur local, d'un déphaseur et de mélangeurs créant respectivement une première voie I en phase et une deuxième voie Q en quadrature de phase avec le signal d'entrée. Les signaux délivrés par les mélangeurs sont discrétisés par des convertisseurs analogique/numérique, ou CAN. Des moyens de filtrage du signal à diverses étapes de la transposition du signal peuvent également être mis en oeuvre afin d'éviter les phénomènes de remontées de spectre liées aux transpositions de fréquence et aux réductions du rythme d'échantillonnage. Le signal en sortie de chaîne radio est un signal numérique bande de base échantillonné à un rythme supérieur au rythme symbole de la modulation (généralement un multiple entier du rythme symbole).

En aval de la chaîne radio, le récepteur comprend des moyens de calcul 130 en charge de l'exécution de tous les algorithmes de traitements du signal nécessaires afin d'assurer la bonne réception du signal. Ces moyens de calcul peuvent se présenter, par exemple, sous la forme d'une machine de calcul reprogrammable, tel un processeur, un DSP (acronyme anglais pour Digital Signal Processor, ou processeur de signal numérique), ou un micro contrôleur, sous la forme d'une machine de calcul dédiée, tel qu'un ensemble de portes logiques comme un FPGA (acronyme anglais pour Field-Programmable Gate Array, ou circuit intégré programmable) ou un ASIC (acronyme anglais pour Application Specific Integrated Circuit, ou circuit intégré à application spécifique), ou sous la forme de tout autre module matériel permettant l'exécution de calculs.

Les moyens de calculs sont en charge de la synchronisation 140 du récepteur. L'objet de la synchronisation est de sélectionner le meilleur instant d'échantillonnage, et de mesurer et compenser les décalages temporels et fréquentiels dus à la propagation du signal ainsi qu'à la vitesse et aux imprécisions des oscillateurs locaux de l'émetteur et du récepteur. La synchronisation est généralement réalisée en considérant les séquences d'apprentissage. La position temporelle et fréquentielle de synchronisation déterminée est identique pour l'ensemble des voies. Celle-ci peut être déterminée en synchronisant chacune des voies indépendamment puis en choisissant la position offrant les meilleures performances, ou par un procédé spécifique de synchronisation multivoies, tel que celui décrit dans le brevet Européen EP 0665665 B1, cette dernière solution offrant de meilleures performances en termes de robustesse face au bruit et aux interférences. Le signal résultant se présente alors sous la forme d'un signal multivoies synchronisé, généralement échantillonné au rythme symbole.

Les moyens de calcul sont également en charge de l'égalisation multivoies anti-brouillée 150 du signal. Le rôle de l'égalisation multivoies anti-brouillée consiste à optimiser la réception de l'ensemble des multitrajets associés au signal utile et à supprimer les signaux interférents non désirés en générant des « trous » dans le diagramme de rayonnement des antennes en direction des interféreurs et des multi-trajets dont l'étalement des retards est en dehors de la fenêtre d'égalisation. La longueur de la fenêtre de l'égaliseur multivoies est un choix d'implémentation, déterminé en fonction d'un compromis entre les probabilités d'occurrence d'un canal de propagation dont l'étalement est supérieur à cette taille, et la complexité nécessaire à son implémentation. L'égalisation multivoies peut être réalisée indifféremment dans le domaine temporel ou dans le domaine fréquentiel, tel que décrit plus loin dans ce document.

L'invention se situe dans cette partie du récepteur, et est indépendante du choix des algorithmes de traitement d'antenne et d'égalisation. Elle concerne l'égalisation multivoies antibrouillée du signal réalisée dans le domaine fréquentiel. Le signal résultant de cette égalisation est un signal monovoie, échantillonné au rythme symbole, dans lequel l'influence des différentes sources de dégradation, comme les brouilleurs et les multi-trajets liés à la propagation de l'onde radio, a été minimisée, voire supprimée. Il correspond à une estimation $\hat{s}(n)$ de la suite des symboles émis sur le bloc.

Enfin, les moyens de calculs sont en charge de l'ensemble des algorithmes de traitement du signal 160 nécessaires pour reconstituer les bits utiles transmis à partir de l'estimée $\hat{s}(n)$ de la suite des symboles émis. Ces algorithmes sont par exemple des algorithmes de décodage canal, de désentrelacement, de déchiffrement, ou autre, dont le choix et les paramètres d'implémentation dépendent du standard de communication utilisé. Suivant le type d'algorithme utilisé, les symboles estimés $\hat{s}(n)$ transmis aux moyens de calculs peuvent être des symboles décidés ou non décidés. Ils peuvent également être associés à une estimation du SNR pour permettre ou non un calcul de rapport de vraisemblance logarithmique (en anglais pour Log Likelihood Ratio, ou LLR).

Dans la suite, les notations suivantes seront utilisées :

• $P$ est la longueur des séquences d'apprentissage, en nombre de symboles,

• $L$ est la longueur de la fenêtre de l'égaliseur, en nombre de symboles. Cette fenêtre correspond à l'étalement maximum des trajets pouvant être égalisés. Lorsque le canal de propagation comprend des multi-trajets dont l'étalement est supérieur à cette distance *L*, ces trajets sont vus comme des signaux interférents,

- *A* (majuscule) désigne une matrice,

- *a* (gras) désigne un vecteur,

- ⌢ désigne une quantité estimée,

- $x_k(n)$ désigne le signal reçu sur la voie *k* pour le symbole *n*,

- *x*(*n*) désigne le signal multicapteurs reçu pour le symbole *n*,

- *x*(*f*) désigne le signal multicapteurs reçu, transposé dans le domaine fréquentiel, pour la fréquence *f*,

- $x_k(f)$ désigne le signal reçu sur la voie *k*, transposé dans le domaine fréquentiel, pour la fréquence *f*,

- *d*(*n*) désigne le signal émis sur les séquences d'apprentissage pour le symbole *n*,

- *s*(*n*) désigne le signal émis sur les séquences d'information,

- *K* désigne le nombre de voies du récepteur,

- *h*(*n*) est le vecteur multivoies, de taille *K*, contenant la réponse impulsionnelle du canal de propagation multicapteurs, pour le symbole *n*, avec *n* = 0, ...,*L* - 1,

- $\hat{h}_k(n)$ est la réponse impulsionnelle temporelle du canal obtenue sur la voie *k*, avec *k* = 1,..., *K* et *n* = 0,..., *L* - 1,

- *b*(*n*) est un vecteur de taille *K* désignant le bruit de réception total (bruit de fond plus interférences éventuelles, plus multitrajets utiles éventuels situés en dehors de la fenêtre d'égalisation, c'est-à-dire qui arrivent avant le premier trajet compris dans la fenêtre d'égalisation ou dont le retard est supérieur à *L* symboles par rapport à ce premier trajet),

- *R* désigne la matrice d'autocorrélation du bruit de réception total,

- *T* désigne l'opérateur transposé,

- *H* désigne l'opérateur transposé-conjugué,

- *E*[*a*] désigne l'espérance mathématique de a.

L'invention s'applique donc sur un signal multivoies, à la suite d'une étape de synchronisation.
Après synchronisation, le vecteur signal reçu sur le réseau de capteurs s'écrit :

$$x(n) = \sum_{i=0}^{L-1} e(n-i)h(i) + b(n) \qquad (3)$$

avec e(n) le signal émis, valant *d*(n) pour les séquences d'apprentissage et *s*(n) pour les séquences d'information.
En notant :

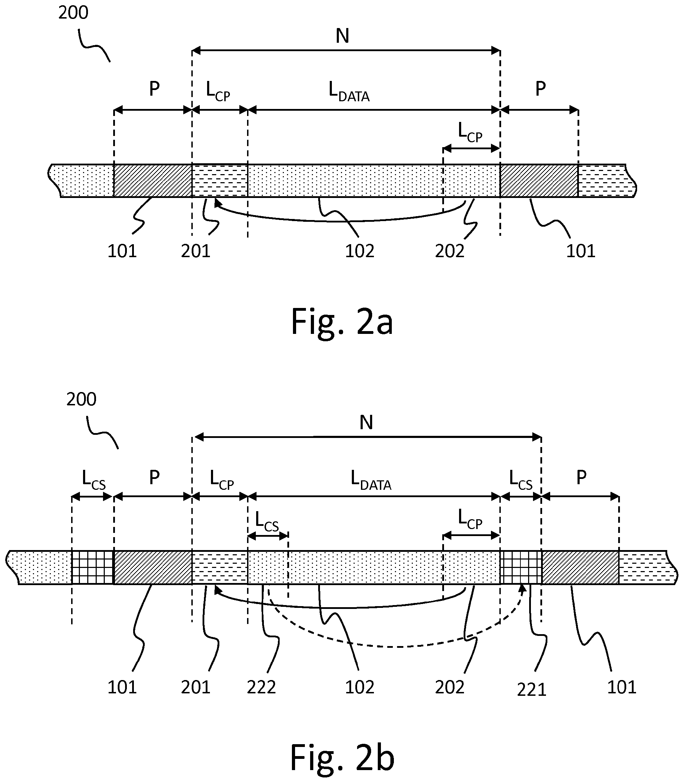

- *d*(*n*) = [*d*(*n*), *d*(*n* - 1),...,*d*(*n* - *L* + 1)]$^T$ le vecteur de taille *L* formé à partir des symboles d'apprentissage, et
- *H* = [*h*(0),*h*(1),...,*h*(*L* - 1)] la matrice de canal multicapteurs formée à partir des vecteurs *h*(*i*) de taille (*K*,*L*),

alors la relation peut s'écrire *x*(*n*) = *Hd*(*n*) + *b*(*n*).
L'invention porte sur un procédé d'égalisation multivoies antibrouillé dont la réalisation comprend une unique étape de filtrage spatio-fréquentiel du signal, équivalente à un filtrage spatio-temporel réalisé dans le domaine fréquentiel. Ce procédé d'égalisation multivoies est adapté à la réception d'une forme d'onde monoporteuse conçue pour être égalisée dans le domaine fréquentiel, c'est-à-dire une forme d'onde pour laquelle les blocs de data comprennent un préfixe cyclique, suivant la structure décrite en figure 2a, ou pour laquelle un préfixe cyclique peut être obtenu, ainsi qu'à la réception d'une forme d'onde multiporteuses (comme par exemple une forme d'onde de type OFDM).

La structure de la trame 200 décrite en figure 2a comprend, en plus des séquences de données utiles 102, de taille $L_{DATA}$, et des séquences d'apprentissage 101, de taille P, des séquences 201, appelés préfixes cycliques, de taille $L_{CP}$. Ces séquences sont construites en recopiant les $L_{CP}$ derniers symboles 202 des séquences d'informations avant cette séquence, et permettent d'assurer l'absence d'interférences entre les différents blocs de séquences d'information et de séquences d'apprentissage. La longueur $L$ du canal de propagation pouvant être égalisée est alors égale à la longueur du préfixe cyclique plus un : $L = L_{CP} + 1$. La taille totale de la séquence d'informations est alors égale à $N = L_{DATA} + L_{CP}$.

Afin d'optimiser le débit utile, l'ajout d'un préfixe cyclique pour chaque bloc de séquences d'information peut cependant être évité par l'un des deux moyens suivants :

- les séquences d'apprentissage peuvent jouer le rôle de préfixes cycliques dès lors que les deux séquences d'apprentissage 101 entourant un bloc de données 102 sont identiques, ou

- un préfixe cyclique peut être reconstitué par l'utilisation d'une technique dite de « zero-padding », sur les séquences d'apprentissage, comme c'est par exemple décrit dans « Cyclic Prefixing or Zero Padding for Wireless Multicarrier Transmissions », de B.Muquet et al., IEEE Transactions Communications, Vol. 50, Décembre 2002.

De cette manière, un préfixe cyclique est introduit artificiellement, ce qui permet d'utiliser le format de trame décrit en figure 1a pour l'égalisation multivoies dans le domaine fréquentiel.

De manière avantageuse, un suffixe cyclique peut également être ajouté dans la structure de la trame égalisée. La figure 2b présente une structure de trame intégrant un tel suffixe cyclique 221, les $L_{CS}$ échantillons composant ce suffixe étant obtenus par recopie des $L_{CS}$ premiers échantillons 222 de la partie utile de la séquence de données utiles 102.

Le suffixe cyclique a pour objet de compenser un défaut de précision de la position de synchronisation. Il est de taille $L_{CS}$ valant quelques échantillons (typiquement inférieur ou égal à 2 échantillons), les échantillons du suffixe cyclique étant égaux aux premiers échantillons de la séquence de données utiles. Sa présence est avantageuse, et l'invention s'applique de manière identique en considérant $L_{CS}$ égal à zéro. La taille totale de la séquence d'information est alors égale à $N = L_{DATA} + L_{CP} + L_{CS}$.

Les multi-trajets pouvant être égalisés sont alors ceux situés dans une fenêtre de taille $L$ à partir du premier trajet, avec $L = L_{CP} + 1$., ainsi que ceux situés en amont de la position de synchronisation d'une distance inférieure à $L_{CS}$.

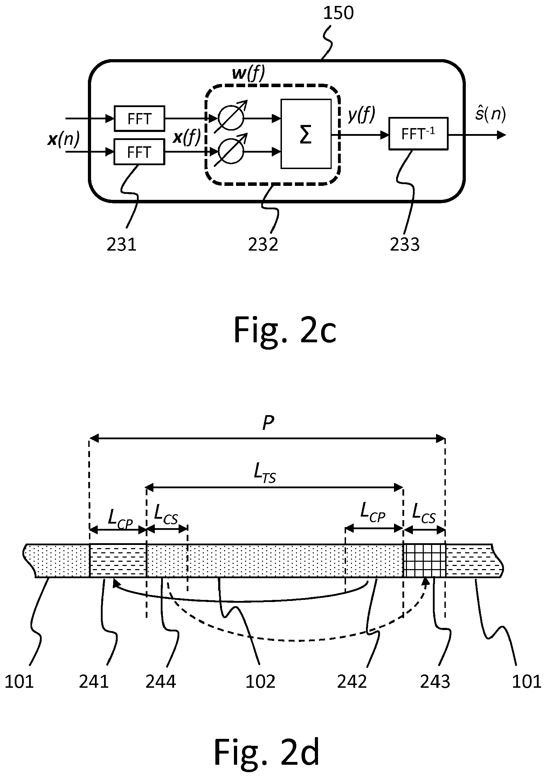

La figure 2c représente la réalisation du traitement d'égalisation multivoies anti-brouillé 150 mis en oeuvre dans le domaine fréquentiel selon l'invention. Ce traitement, comprend pour chaque voie du signal multivoies reçu, la transposition dans le domaine fréquentiel du signal par le biais d'une transformée de Fourier 231 réalisée sur les données reçues sur chacune des voies par blocs. De cette manière, $x(f) = TFD\{x(n)\}$, TFD étant l'acronyme de Transformée de Fourier Discrète, pour $f = 0, ...,L_{DATA} - 1$ et $n = 0, ..., L_{DATA} - 1$.

Le filtre spatial $\hat{w}(f)$ 232 est alors appliqué sur chacune des voies, pour chaque fréquence, avec :

$$\hat{w}(f) = \frac{\hat{R}^{-1}\hat{h}(\mathrm{f})}{1 + \hat{h}(\mathrm{f})^{\mathrm{H}}\hat{R}^{-1}\hat{h}(\mathrm{f})}. \qquad (4)$$

A l'issue de ce filtrage spatio-fréquentiel, le signal est un signal monovoie égalisé en fréquence, qui s'écrit :

$$y(f) = \hat{w}(f)^{H}x(f).$$

Il est ensuite ramené dans le domaine temporel par le biais d'une transformée de Fourier inverse 233, puis normalisé.

Le filtrage du signal multivoies reçu par le filtre spatio-temporel $\hat{w}(f)$ réalise alors à la fois les fonctions de rejection des brouilleurs, d'égalisation et de sommation des voies du signal d'entrée.

La normalisation de ce signal s'effectue en estimant le rapport signal à bruit plus interféreur (en anglais SINR pour Signal to Interference plus Noise Ratio), à partir des deux formules suivantes :

$$\eta = \frac{1}{N} \sum_{f=0}^{L_{DATA}-1} \frac{\widehat{\boldsymbol{h}}(f)^H \widehat{R}^{-1} \widehat{\boldsymbol{h}}(f)}{1 + \widehat{\boldsymbol{h}}(f)^H \widehat{R}^{-1} \widehat{\boldsymbol{h}}(f)} \qquad (5)$$

et :

$$SINR = \frac{\eta}{1 - \eta} \qquad (6)$$

Le signal égalisé est normalisé en multipliant le signal ramené dans le domaine fréquentiel par $1/\eta$. La suite des symboles estimés sur le bloc de longueur $L_{DATA}$ vaut alors :

$$\hat{s}(n) = \frac{1}{\eta} TFD^{-1}\{y(f)\} \qquad (7)$$

pour $n = 0,...,L_{DATA} - 1$.

Avantageusement, dans l'ensemble des traitements précédents, des transformées de Fourier rapides (ou FFT, pour l'acronyme anglais de Fast Fourier Transform) peuvent être utilisées à la place des transformées de Fourier discrètes. L'utilisation de transformées de Fourier rapide permet d'accélérer les traitements et de diminuer la complexité de la transposition fréquentielle du signal. L'utilisation de FFT requiert l'utilisation de tailles de blocs de données particulières, généralement des puissances de 2. Cependant, il est possible d'utiliser des FFT sur n'importe quelle taille de bloc de données en insérant des données nulles afin d'obtenir la taille souhaitée, technique connue sous le terme de « zero-padding ».

L'ensemble du traitement d'égalisation multivoies antibrouillé appliqué dans le domaine temporel repose donc sur l'estimation des vecteurs $\hat{\boldsymbol{h}}(f)$, qui décrivent la réponse impulsionnelle multivoie du canal de propagation pour chaque fréquence $f$, et de la matrice $\hat{R}$ d'autocorrélation du bruit total.

Ces calculs peuvent être réalisés dans le domaine temporel ou dans le domaine fréquentiel.

1<sup>er</sup> mode de réalisation : calcul des vecteurs $\hat{\boldsymbol{h}}(f)$ et de la matrice $\hat{R}$ dans le domaine temporel.

Dans ce mode de réalisation, les multi-trajets pouvant être égalisés sont ceux situés dans une fenêtre de taille $L$ à partir de la position de synchronisation, avec $= L_{CP} + 1$, où $L_{CP}$ est la taille du préfixe cyclique utilisé pour les séquences d'information. Dans ce mode de réalisation, les séquences d'apprentissage ne possèdent pas nécessairement de préfixe cyclique.

Ce mode de réalisation s'appuie sur le calcul, dans le domaine temporel, des matrices suivantes à partir des séquences d'apprentissage :

$$R_{DD} = \frac{1}{P - L + 1} \sum_{n=L-1}^{P-1} \boldsymbol{d}(n)\boldsymbol{d}(n)^H, \qquad (8)$$

$$\widehat{R}_{DX} = \frac{1}{P - L + 1} \sum_{n=L-1}^{P-1} \boldsymbol{d}(n)\boldsymbol{x}(n)^H, \qquad (9)$$

$$\widehat{R}_{XX} = \frac{1}{P - L + 1} \sum_{n=L-1}^{P-1} \boldsymbol{x}(n)\boldsymbol{x}(n)^H, \qquad (10)$$

avec $R_{DD}$ la matrice d'autocorrélation du signal d'apprentissage, $\widehat{R}_{DX}$ la matrice d'intercorrélation entre le signal d'apprentissage et le signal correspondant reçu, et $\widehat{R}_{XX}$ la matrice d'autocorrélation du signal reçu.

Les matrices sont respectivement de tailles $(L,L)$, $(L,K)$, et $(K,K)$. La matrice $R_{DD}$ étant calculée à partir du signal d'apprentissage, le résultat de ce calcul est connu d'avance et peut avantageusement être stocké dans une mémoire du récepteur.

La matrice $\hat{H}$ de canal de propagation multicapteurs est alors calculée directement à partir des matrices calculées précédemment :

$$\hat{H} = \hat{R}_{DX}{}^{H}R_{DD}{}^{-1}. \qquad (11)$$

$\hat{H}$ est de taille ($K,L$) et est formée à partir des vecteurs du canal de propagation estimés $\hat{\boldsymbol{h}}(n)$ :

$$\hat{H} = \left[\hat{\boldsymbol{h}}(0) \dots \hat{\boldsymbol{h}}(L-1)\right]. \qquad (12)$$

Les vecteurs $\hat{\boldsymbol{h}}(f)$, réponse impulsionnelle multivoies du canal de propagation pour chaque fréquence *f*, sont alors obtenus en réalisant sur chaque voie *k* de la matrice *H* une transformée de Fourier de la réponse impulsionnelle du canal $\hat{h}_k(n)$, avec *n* = 0, ..., *L* - 1.

Les vecteurs $\hat{h}_k(n)$ sont de taille *L*. Afin d'être appliqué au signal d'entrée transposé dans le domaine fréquentiel *x*(*f*), *w*(*f*) (et donc $\hat{\boldsymbol{h}}(f)$), doit être de taille égale à celle de la transformée de Fourier 231, elle-même généralement égale à $L_{DATA}$. Il est donc nécessaire d'interpoler le vecteur $\hat{\boldsymbol{h}}(f)$, cette interpolation pouvant se faire avantageusement en complétant les $\hat{h}_k(n)$ par des valeurs nulles :

$$\hat{h}_k(n) = 0 \text{ pour } n = L, \dots, L_{DATA} - 1 \qquad (13)$$

De cette manière, $\hat{h}_k(f)$ vaut :

$$\hat{h}_{\boldsymbol{k}}(f) = TFD\{\hat{h}_{\boldsymbol{k}}(n)\}, \qquad (14)$$

avec *n* = 0, ..., $L_{DATA}$ - 1; *f* = 0, ..., $L_{DATA}$ - 1; et *k* = 1,...,*K*

La matrice de corrélation du bruit et des interférences $R = E[\boldsymbol{b}(n)\boldsymbol{b}(n)^{H}]$, est calculée directement à l'aide de la matrice $\hat{H}$ et des matrices $\hat{R}_{DX}$ et $\hat{R}_{XX}$ suivant la formule suivante:

$$\hat{R} = \hat{R}_{XX} - \hat{H}\hat{R}_{DX}. \qquad (15)$$

Cette matrice $\hat{R}$, de taille ($K \times K$), sera utilisée pour le calcul des coefficients du filtre spatial appliqué lors de l'étape d'égalisation spatiofréquentielle.

De cette manière, le calcul des vecteurs $\hat{\boldsymbol{h}}(f)$ et de la matrice $\hat{R}$ est extrêmement simple, peu couteux en terme de puissance de calcul nécessaire, et donc rapide, ce qui présente un intérêt dès lors que le débit ou le nombre de voies augmente.

2<sup>ème</sup> mode de réalisation : calcul des vecteurs $\hat{\boldsymbol{h}}(f)$ et de la matrice $\hat{R}$ dans le domaine fréquentiel.

Dans ce mode de réalisation, une estimée de canal est réalisée dans le domaine fréquentiel sur chaque voie de réception, puis une opération de transformée de Fourier inverse permet d'obtenir les estimées dans le domaine temporel. La matrice de corrélation totale du bruit $\hat{R}$ se calcule à partir des éléments de la réponse impulsionnelle du canal correspondant aux échantillons de bruit.

L'intérêt de ce deuxième mode de réalisation est qu'il permet de réduire la puissance de calcul nécessaire lorsque la longueur *L* de la réponse impulsionnelle du canal de propagation augmente.

Afin de pouvoir réaliser l'estimation de canal dans le domaine fréquentiel sur les séquences d'apprentissage, un préfixe cyclique, et éventuellement un suffixe cyclique, de longueurs égales aux longueurs des préfixes et suffixes cycliques des séquences d'information, sont introduits dans la structure de la trame pour les séquences d'apprentissage.

La figure 2d représente la structure des séquences d'apprentissage dans les trames permettant la mise en oeuvre de l'invention selon un de ses modes de réalisation. Les séquences d'apprentissage comprennent des préfixes cycliques 241 obtenus en recopiant les $L_{CP}$ derniers échantillons 242 de la partie utile de la séquence d'apprentissage, et éventuellement des suffixes cycliques 243 obtenus en recopiant les $L_{CS}$ premiers échantillons 244 de la partie utile de la séquence d'apprentissage. La longueur totale de la séquence d'apprentissage est alors égale à $P = L_{TS} + L_{CP} + L_{CS}$

L'estimation de $\hat{h}(f)$ consiste à effectuer une estimation fréquentielle du canal pour chaque voie de réception $k$. Cette estimation se fait en plusieurs étapes :

- Estimation temporelle du canal de propagation, à partir des représentations fréquentielles du signal :
  cette étape est réalisée, pour chaque séquence d'apprentissage, à partir d'une transformée de Fourier inverse de la réponse impulsionnelle calculée à partir des signaux dans le domaine fréquentiel, pour chacune des voies du récepteur :

$$\hat{h}_k(n) = ITFD\{\frac{x_k(f)}{d(f)}\}, \qquad (16)$$

avec $d(f)$ = $TFD\{d(t)\}$, pour $n$ = 0,...,$L_{TS}$ - 1 et $f$ = 0, ...,$L_{TS}$ - 1.

- Réduction de bruit de la réponse impulsionnelle :
  cette étape permet de supprimer les contributions de l'estimée du canal de propagation liées au bruit et aux interférences éventuelles. Elle consiste à forcer à zéro les valeurs de $\hat{h}_k$ situées dans les plages situées en dehors de la fenêtre de l'égaliseur. Pour cela, on appelle $L_b$ le nombre d'échantillons de bruit, avec $L_b$ = $L_{TS}$ - $L_{CS}$ - L.

$$\hat{h}_k(n) = \begin{cases} \hat{h}_k(n) & \text{pour } n \in [0; L-1] \cup [L+L_b; L_{TS}-1] \\ 0 & \text{pour } n \in [L; L+L_b-1] \end{cases}. \qquad (17)$$

- Moyennage des réponses temporelles
  cette étape, optionnelle, consiste à tirer profit de la stationnarité du canal de propagation sur plusieurs séquences d'apprentissage successives pour lisser le bruit d'estimation. Ce moyennage peut, selon les cas, être réalisé en considérant les réponses impulsionnelles estimées sur l'ensemble des séquences d'apprentissage de la trame, ou être limité aux séquences entourant le bloc de données utiles considérées. Il peut également être associé à une pondération des estimées, le facteur de pondération dépendant d'un critère de qualité du signal, comme une estimée du niveau de puissance du signal reçu, une estimée du rapport signal à bruit, ou tout autre moyen connu de l'homme du métier.
  Dans le cas où le moyennage est réalisé en considérant l'ensemble des réponses temporelles de canal, il s'exprime comme suit :

$$\hat{h}_k(n) = \frac{1}{N_{TS}} \sum_{i=1}^{N_{TS}} \hat{h}_{k,i}(n), \qquad (18)$$

pour $n \in [0; L-1] \cup [L+L_b; L_{TS}-1]$, $\hat{h}_{k,i}(n)$ étant la réponse impulsionnelle estimée pour la voie $k$ et la séquence d'apprentissage $i$, et $N_{TS}$ le nombre de séquences d'apprentissage considéré.

- Interpolation fréquentielle de la réponse du canal de propagation :
  De manière à pouvoir être appliquée au signal utile, l'estimée de la réponse impulsionnelle du canal de propagation dans le domaine fréquentiel doit être de taille égale à la taille (généralement $L_{DATA}$) de la transformée de Fourier 231 appliquée au signal reçu sur les séquences d'information. Une manière simple de réaliser cette interpolation consiste à compléter la réponse impulsionnelle estimée dans le domaine temporel par des valeurs nulles avant de réaliser sa transformée de Fourier :

$$\hat{h}_k^{ZP}(n) = \begin{cases} \hat{h}_k(n) & \text{pour } n = [0; L+L_b-1] \\ 0 & \text{pour } n = [L+L_b; L_{DATA}-L_{CS}-1] \\ \hat{h}_k(n) & \text{pour } n = [L_{DATA}-L_{CS}; L_{DATA}-1] \end{cases}. \qquad (19)$$

avec $\hat{h}_k^{ZP}(n)$ la réponse impulsionnelle dans le domaine temporel après ajout de zéros.

Le calcul de la réponse impulsionnelle dans le domaine fréquentiel, pour chacune des voies, est le suivant :

$$\hat{h}_k(f) = TFD\{\hat{h}_k^{ZP}(n)\}, \tag{20}$$

pour $n$ variant de 0 à $L_{DATA}$ - 1 et $k$ variant de 1 à $K$.

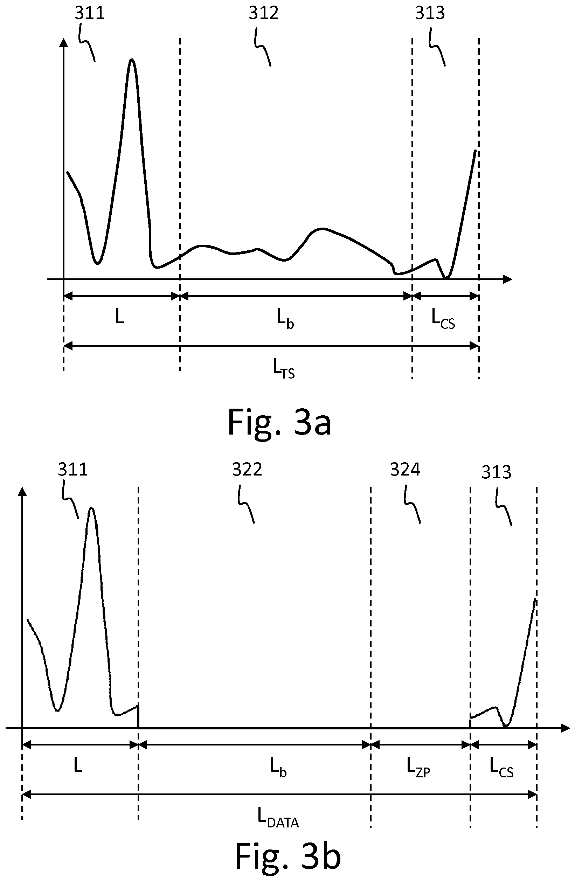

Les figures 3a et 3b illustrent les transformations apportées à la réponse impulsionnelle $\hat{h}_k(n)$ estimée à l'équation (16) par ce mode de réalisation du procédé d'égalisation selon l'invention.

Dans la figure 3a est représentée une réponse impulsionnelle estimée. Cette réponse présente une partie 311 de taille $L$ (ou $L_{CP}$ + 1), dans laquelle les trajets multiples sont compris dans la fenêtre de l'égaliseur, une partie 312, de taille $L_b$, dans laquelle la réponse se rapporte aux interférences et trajets multiples situés hors de l'égaliseur, et une partie 313, de taille $L_{CS}$, correspondant au canal de propagation estimé sur le suffixe cyclique.

La figure 3b représente la réponse impulsionnelle à l'issue des traitements successifs qui lui sont appliqués. La partie 322 se rapportant aux interférences a été remplacée par des valeurs nulles lors de l'étape de réduction du bruit. Une partie supplémentaire 324 correspond aux zéros introduits lors de l'étape d'interpolation fréquentielle, le nombre $L_{ZP}$ de zéros introduits valant $L_{ZP} = L_{DATA} - L_{TS}$.

Le calcul de la matrice R d'autocorrélation du bruit total se fait à partir des réponses impulsionnelles calculées précédemment.

Ce calcul part du principe que les échantillons de la réponse impulsionnelle du canal calculée dans le domaine temporel à l'équation (16) comprennent du signal utile, noté $\hat{u}_k(n)$, lorsque $n \in I_u = [0; L - 1] \cup [L + L_b; L_{TS} - 1]$, et du bruit, noté $\hat{b}_k(n)$, lorsque $n \in I_b = [L; L + L_b - 1]$.

Ainsi, on notera respectivement $\hat{u}(n)$ et $\hat{b}(n)$ les vecteurs signal utile et bruit reçus pour chaque séquence d'apprentissage:

$$\hat{\boldsymbol{u}}(n) = [\hat{\boldsymbol{u}}_1(n) \dots \hat{\boldsymbol{u}}_K(n)]^T,$$
$$\hat{\boldsymbol{b}}(n) = [\hat{\boldsymbol{b}}_1(n) \dots \hat{\boldsymbol{b}}_K(n)]^T. \tag{21}$$

On notera également $\hat{u}_i(n)$ et $\hat{b}_i(n)$ ces séquences lorsqu'elles sont calculées à partir de la séquence d'apprentissage $i$.

Selon un premier mode de réalisation, la matrice $\hat{R}$ d'autocorrélation du bruit total est calculée directement à partir des échantillons de bruit estimé :

$$\hat{R} = \sum_{n \in I_b} \hat{\boldsymbol{b}}(n)\hat{\boldsymbol{b}}(n)^H. \tag{22}$$

Avantageusement, la matrice R peut être estimée en moyennant les valeurs du bruit reçu sur plusieurs séquences d'apprentissage :

$$\hat{R} = \frac{1}{N_{TS}} \sum_{i=0}^{N_{TS}-1} \left( \sum_{n \in I_b} \hat{\boldsymbol{b}}_i(n)\hat{\boldsymbol{b}}_i(n)^H \right). \tag{23}$$

Des coefficients de pondérations peuvent être ajoutés afin d'ajuster la contribution des estimées de bruit de chacune des séquences d'apprentissage par un facteur dépendant de la qualité du signal reçu.

L'invention permet donc bien le calcul simple et peu complexe d'une matrice $\hat{R}$ d'autocorrélation du bruit total d'un signal multivoies, et son utilisation pour l'égalisation multivoie d'un signal dans lequel le bruit n'est pas nécessairement blanc temporellement et spatialement.

Selon un deuxième mode de réalisation, applicable lorsque plusieurs séquences d'apprentissage sont disponibles, la matrice $\hat{R}$ d'auto-corrélation du bruit total est calculée de la manière suivante :

- estimation de la matrice de corrélation du signal total (signal utile + bruit total) reçu sur l'ensemble des séquences d'apprentissage :

$$\hat{R}_{XX} = \frac{1}{N_{TS}} \sum_{i=O}^{N_{TS}-1} \left( \sum_{n \in I_u} \widehat{\boldsymbol{u}}_i(n)\widehat{\boldsymbol{u}}_i(n)^H + \sum_{n \in I_b} \widehat{\boldsymbol{b}}_i(n)\widehat{\boldsymbol{b}}_i(n)^H \right). \qquad (24)$$

Avantageusement, l'équation précédente peut être ajustée de manière à pondérer le signal estimé sur chacune des séquences d'apprentissage par un facteur dépendant de la qualité du signal reçu.

- Estimation des vecteurs signaux utiles moyens reçus:

$$\boldsymbol{u_m}(n) = \frac{1}{N_{TS}} \sum_{i=O}^{N_{TS}-1} \widehat{\boldsymbol{u}}_i(n), \qquad (25)$$

avec $\hat{\boldsymbol{u}}_m(n)$ le vecteur signal utile moyen.
- Estimation de la matrice de corrélation du signal utile reçu :

$$\hat{R}_{SS} = \sum_{n \in I_u} \widehat{\boldsymbol{u}}_m(n)\widehat{\boldsymbol{u}}_m(n)^H, \qquad (26)$$

avec $\hat{R}_{SS}$ la matrice de corrélation du signal utile.

La matrice de corrélation du bruit total s'obtient alors en soustrayant la matrice de corrélation du signal utile à la matrice de corrélation du signal total reçu :

$$\hat{R} = \frac{1}{L_{TS}} \left( \hat{R}_{XX} - \hat{R}_{SS} \right). \qquad (27)$$

La matrice $\hat{R}$ d'autocorrélation du bruit total calculée selon ce mode d'estimation est égale à la matrice $\hat{R}$ calculée par le mode de réalisation précédent, lorsque $N_{TS}$ = 1, pour une charge de calcul légèrement plus importante. Cependant, lorsque le nombre de séquences d'apprentissage considéré augmente, la matrice résultant du deuxième mode de calcul peut permettre d'optimiser les performances lorsque le canal de propagation est particulièrement mauvais, comme par exemple en présence d'un canal dit de Rayleigh pouvant se caractériser, dans les situations de mobilité et au voisinage des trous de fading, par une variation très importante du canal utile reçu sur un horizon temporel correspondant à plusieurs séquences d'apprentissage successives. Dans cette situation, le deuxième mode de calcul de la matrice a tendance à conduire à une sur-estimation du niveau de bruit par rapport au premier mode d'estimation, ce qui est le résultat recherché. En effet, comme le niveau de bruit est sur-estimé, les LLR (acronyme anglais pour Log Likelihood Ratio) associés à ce palier seront mauvais, ce qui peut permettre à un algorithme de décodage de favoriser les parties de la trame n'ayant pas subi ces conditions de canal particulièrement mauvaises, et donc améliorer les performances du récepteur.

Que ce soit à partir d'une estimation des vecteurs $\hat{\boldsymbol{h}}(f)$ et de la matrice d'autocorrélation du bruit totale $\hat{R}$ réalisée à partir d'un signal dans le domaine temporel ou dans le domaine fréquentiel, l'invention présente une complexité d'implémentation réduite, en particulier car elle ne requiert pas l'implémentation des batteries de corrélateurs en parallèle.

Les opérations réalisées s'appuient sur des transpositions du signal dans le domaine fréquentiel, pouvant être avantageusement être réalisées à partir de transformées de Fourier rapide (FFT), dont des implémentations très optimisées sont fréquemment proposées dans les architectures de récepteurs, et qui présentent une complexité et un temps de calcul extrêmement faible.

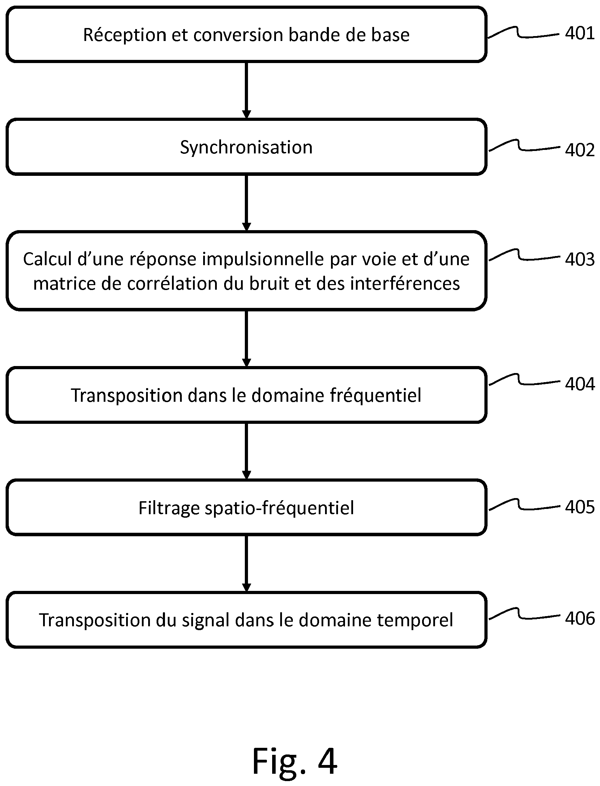

L'invention porte sur un procédé d'égalisation multivoies antibrouillé mis en oeuvre dans le domaine fréquentiel. Les étapes de ce procédé sont illustrées en figure 4.

La première étape 401 du procédé consiste en la réception du signal transmis comprenant des séquences d'apprentissage et des séquences de données sur une pluralité de capteurs, ou antennes. Le signal multivoies reçu se voit appliquer des traitements analogiques et numériques aboutissant à la numérisation du signal, les traitements comprenant la transposition du signal en bande de base ou fréquence intermédiaire, les filtrages associés, et la conversion analogique/numérique sur chacune des voies.

La deuxième étape 402 du procédé consiste en la synchronisation temporelle et fréquentielle du signal reçu, cette étape pouvant avantageusement être réalisée au moyen d'un algorithme de synchronisation multivoies. Cette étape permet en outre de savoir quelles parties du signal multivoies reçu correspondent aux séquences de données, et quelles parties correspondent aux séquences d'apprentissage.

La troisième étape 403 du procédé consiste à calculer, pour chacune des voies du récepteur, une réponse impulsionnelle dans le domaine fréquentiel du canal multivoies $\hat{\boldsymbol{h}}(f)$, et d'une matrice $\hat{R}$ de corrélation du bruit et des interférences.

Cette étape est réalisée à partir du contenu, connu, de la séquence d'apprentissage, ainsi que du signal multivoies reçu correspondant à cette séquence d'apprentissage. Plusieurs modes de réalisation, détaillés précédemment, permettent d'aboutir à ce calcul. Certains de ces modes de réalisation utilisent le signal multivoies reçu dans le domaine temporel, d'autres utilisent ce signal après sa transposition dans le domaine fréquentiel. Dans certains modes de réalisation, l'estimation de la réponse impulsionnelle est faite sur plusieurs séquences d'apprentissage, puis moyennée.

La quatrième étape 404 du procédé consiste à transposer dans le domaine fréquentiel chaque voie du signal multivoies reçu, et en particulier les données correspondant aux séquences de données utiles.

La cinquième étape 405 du procédé consiste à filtrer, dans le domaine fréquentiel, les parties du signal multivoies reçu correspondant aux séquences de données utiles, par un filtre spatio-temporel donné par le vecteur $\boldsymbol{w}(f)$, avec

$$\boldsymbol{w}(f) = \frac{\hat{R}^{-1}\hat{\boldsymbol{h}}(f)}{1 + \hat{\boldsymbol{h}}(f)^H \hat{R}^{-1}\hat{\boldsymbol{h}}(f)}.$$

A l'issue du filtrage du signal multivoies par le filtre $\boldsymbol{w}(f)$, le signal résultant est un signal monovoie, égalisé en fréquence, et antibrouillé. Avantageusement, cette étape est suivie d'une étape de normalisation du signal monovoie.

Enfin, la sixième étape 406 du procédé consiste à transposer le signal monovoie dans le domaine fréquentiel, par le biais d'une transformée de Fourier inverse.

Les étapes du procédé sont réalisées à partir des séquences d'apprentissage reçues, ces séquences étant alors connues du récepteur, pour tout ce qui a trait à l'estimation du filtre spatio-fréquentiel $\boldsymbol{w}(f)$. Les calculs peuvent être réalisés pour chaque séquence d'apprentissage. Le traitement est alors adapté au suivi des variations rapides du canal de propagation. Ils peuvent également réalisés pour chaque séquence d'apprentissage, et combinés entre eux, de manière à lisser les erreurs de calcul liées au bruit.

L'invention est compatible de tous les standards de transmission d'un signal monoporteuse dans un récepteur multivoie, mais également d'un signal multiporteuses. Elle est également compatible des transmissions en mode bursté, comme par exemple les transmissions utilisant du saut de fréquence.

Les méthodes d'égalisation multivoies présentées sont optimales en présence de bruit blanc temporellement uniquement. Elles garantissent une capacité de lutte anti-brouillage, y compris contre les trajets utiles qui n'entrent pas dans la fenêtre d'égalisation. Les traitements décrits peuvent être très facilement ajoutés en tête des traitements d'un équipement existant de réception multivoies afin de leur fournir une capacité d'anti-brouillage qu'ils ne possèdent pas en eux-mêmes, sans requérir de modifications des traitements existant.

De plus, le filtrage spatio-fréquentiel, appliqué dans le domaine fréquentiel, ainsi que les calculs proposés de la matrice de corrélation du bruit total, sont très simples d'implémentation et ne nécessite que peu de calculs, ce qui rend l'invention compatible d'une implémentation à un débit élevé ou d'un équipement comprenant un nombre important de voies.

**Revendications**

**1.** Procédé de réception et d'égalisation antibrouillée d'un signal dans un récepteur multivoies, ledit signal comprenant au moins une séquence d'apprentissage (101) formée de symboles connus et au moins une séquence de données utiles (102) formée de symboles inconnus, le procédé étant **caractérisé en ce qu'**il comprend les étapes de :

- réception dudit signal sur une pluralité de voies du récepteur, transposition et discrétisation (401, 111, 121, 112, 122) du signal multivoies en un signal multivoies équivalent bande de base discrétisé,
- synchronisation (402, 140) du signal multivoies bande de base discrétisé,
- calcul (403, 150) d'une réponse impulsionnelle dans le domaine fréquentiel du canal multivoies $\hat{\boldsymbol{h}}(f)$ et d'une matrice $\hat{R}$ de corrélation du bruit et des interférences, à partir d'au moins une partie correspondant à une séquence d'apprentissage dudit signal multivoies synchronisé,

• transposition dans le domaine fréquentiel (404, 231) d'au moins une partie correspondant à une séquence de données utiles du signal multivoies synchronisé, et filtrage (405, 232) par le vecteur $\boldsymbol{w}(f)$, avec

$$w(f) = \frac{\hat{R}^{-1}\widehat{\boldsymbol{h}}(f)}{1 + \widehat{\boldsymbol{h}}(f)^H\hat{R}^{-1}\widehat{\boldsymbol{h}}(f)},$$

le signal résultant dudit filtrage étant un signal monovoie dans le domaine fréquentiel, et
• transposition (406, 233) dans le domaine temporel dudit signal monovoie.

2. Procédé de réception et d'égalisation antibrouillée selon la revendication 1, dans lequel le calcul de la réponse impulsionnelle dans le domaine fréquentiel du canal multivoies $\hat{\boldsymbol{h}}(f)$ comprend les étapes de :

• calcul d'une matrice d'intercorrélation $\hat{R}_{DX}$ entre une séquence d'apprentissage et une partie correspondant à ladite séquence d'apprentissage du signal multivoies synchronisé,
• calcul d'une matrice d'autocorrelation $\hat{R}_{XX}$ de ladite partie correspondant à une séquence d'apprentissage dudit signal multivoies synchronisé,
• calcul d'une matrice $\hat{H}$ de canal multicapteurs à partir de la matrice $\hat{R}_{DX}$ et d'une matrice d'autocorrélation $R_{DD}$ de ladite séquence d'apprentissage :
$\hat{H} = \hat{R}_{DX}{}^H R_{DD}{}^{-1}$, avec $^H$ l'opérateur transposé-conjugué, et
• calcul de la réponse impulsionnelle dans le domaine fréquentiel du canal multivoies $\hat{\boldsymbol{h}}(f)$ par voie du récepteur, par transformée de Fourier effectuée sur des vecteurs $\hat{h}_k(n)$ formant des colonnes de la matrice $\hat{H}$.

3. Procédé de réception et d'égalisation selon la revendication 2, dans lequel la matrice $\hat{R}$ de corrélation du bruit et des interférences est obtenue par la formule :

$$\hat{R} = \hat{R}_{XX} - \hat{H}\hat{R}_{DX}.$$

4. Procédé de réception et d'égalisation antibrouillée selon l'une des revendications 2 et 3, dans lequel lesdites matrices $R_{DD}$, $\hat{R}_{DX}$ et $\hat{R}_{XX}$ sont calculées à partir des formules suivantes :

$$R_{DD} = \frac{1}{P - L + 1}\sum_{n=L-1}^{P-1} \boldsymbol{d}(n)\boldsymbol{d}(n)^H,$$

$$\hat{R}_{DX} = \frac{1}{P - L + 1}\sum_{n=L-1}^{P-1} \boldsymbol{d}(n)\boldsymbol{x}(n)^H,$$

$$\hat{R}_{XX} = \frac{1}{P - L + 1}\sum_{n=L-1}^{P-1} \boldsymbol{x}(n)\boldsymbol{x}(n)^H,$$

où

- $\boldsymbol{d}(n)$ est un vecteur formé à partir des symboles d'une séquence d'apprentissage,
- $\boldsymbol{x}(n)$ est un vecteur formé à partir des symboles reçus dans une partie correspondant à la séquence d'apprentissage $\boldsymbol{d}(n)$ dudit signal multivoies synchronisé,
- P est le nombre de symboles de ladite séquence d'apprentissage $\boldsymbol{d}(n)$,
- $L$ est une longueur d'une fenêtre d'égalisation.

5. Procédé de réception et d'égalisation antibrouillée selon la revendication 1, dans lequel le calcul de la réponse impulsionnelle dans le domaine fréquentiel du canal multivoies $\hat{\boldsymbol{h}}(f)$ comprend les étapes de :

• estimation de la réponse impulsionnelle temporelle du canal de propagation $\hat{h}_k(n)$ pour chaque voie $k$ du récepteur, à partir d'au moins une séquence d'apprentissage et d'au moins une partie correspondant à la ou les dites séquences d'apprentissage du signal multivoies synchronisé, transposées dans le domaine fréquentiel,
• réduction du bruit des réponses impulsionnelles temporelles du canal de propagation $\hat{h}_k(n)$ pour chaque voie $k$ du récepteur, par mise à zéro des valeurs de $\hat{h}_k(n)$ associées à des positions pour lesquelles le signal ne peut être égalisé,
• calcul des vecteurs $\hat{\boldsymbol{h}}(f)$ par interpolation fréquentielle des $\hat{h}_k(n)$.

6. Procédé de réception et d'égalisation antibrouillée selon la revendication 5, dans lequel le calcul de la matrice $\hat{R}$ de corrélation du bruit et des interférences comprend les étapes de :

• détermination, dans les réponses impulsionnelles temporelles $\hat{h}_k(n)$ estimées, des positions $I_b$ des échantillons correspondant à du bruit, et génération des vecteurs $\hat{b}_k(n) = \hat{h}_k(n)$ pour $n$ appartenant à $I_b$,
• calcul des vecteurs bruit $\hat{\boldsymbol{b}}(n)$ à partir des $\hat{b}_k(n)$, et
• calcul de la matrice $\hat{R}$ :

$$\hat{R} = \sum_{n \in I_b} \widehat{\boldsymbol{b}}(n)\widehat{\boldsymbol{b}}(n)^H.$$

7. Procédé de réception et d'égalisation antibrouillée selon la revendication 5, le signal comprenant une pluralité séquences d'apprentissage, dans lequel ladite détermination de la réponse impulsionnelle temporelle pour chaque voie $k$ du récepteur multivoies est réalisé pour $N_{TS}$ séquences d'apprentissage, $\hat{h}_{k,i}(n)$ désignant la réponse impulsionnelle temporelle estimée pour la voie $k$ à partir de la séquence d'apprentissage $i$, et dans lequel le calcul de la matrice $\hat{R}$ de corrélation du bruit et des interférences comprend les étapes de :

• détermination, dans les réponses impulsionnelles temporelles $\hat{h}_{k,i}(n)$ estimées, des positions $I_u$ des échantillons correspondant à du signal utile, et des positions $I_b$ des échantillons correspondant à du bruit, et génération des vecteurs $\hat{u}_{k,i}(n) = \hat{h}_{k,i}(n)$ pour $n$ appartenant à $I_u$, et des vecteurs $\hat{b}_{k,i}(n) = \hat{h}_{k,i}(n)$ pour $n$ appartenant à $I_b$,
• calcul des vecteurs signal utile $\hat{u}_i(n)$ à partir des $\hat{u}_{k,i}(n)$, et des vecteurs bruit $\hat{b}_i(n)$ à partir des $\hat{b}_{k,i}(n)$,
• estimation d'une matrice $\hat{R}_{XX}$ de corrélation du signal total, avec

$$\hat{R}_{XX} = \frac{1}{N_{TS}} \sum_{i=O}^{N_{TS}-1} \left( \sum_{n \in I_u} \widehat{\boldsymbol{u}_i}(n)\widehat{\boldsymbol{u}_i}(n)^H + \sum_{n \in I_b} \widehat{\boldsymbol{b}_i}(n)\widehat{\boldsymbol{b}_i}(n)^H \right)$$

• estimation du vecteur signal utile moyen :

$$\widehat{\boldsymbol{u}_m}(n) = \frac{1}{N_{TS}} \sum_{i=O}^{N_{TS}-1} \widehat{\boldsymbol{u}_i}(n),$$

• estimation d'une matrice $\hat{R}_{SS}$ de corrélation du signal utile reçu :

$$\hat{R}_{SS} = \sum_{n \in I_u} \widehat{\boldsymbol{u}_m}(n)\widehat{\boldsymbol{u}_m}(n)^H,$$

• calcul de la matrice $\hat{R}$ :

$$\hat{R} = \frac{1}{L_{TS}} \left( \hat{R}_{XX} - \hat{R}_{SS} \right).$$

8. Récepteur (110) multivoies permettant la réception et l'égalisation antibrouillée d'un signal comprenant au moins une séquence d'apprentissage (101) formée de symboles connus et au moins une séquence de données utiles (102) formée de symboles inconnus, ledit récepteur étant configuré pour réaliser la réception du signal sur chacune de ses voies, transposer et discrétiser le signal multivoies en un signal multivoies équivalent bande de base discrétisé (401), et étant **caractérisé en ce qu'**il comprend au moins un équipement (130) de traitement du signal configuré pour mettre en oeuvre un procédé de réception et d'égalisation antibrouillée en exécutant les étapes de :

• synchronisation (402) du signal multivoies bande de base discrétisé,
• calcul (403) d'une réponse impulsionnelle dans le domaine fréquentiel du canal multivoies $\hat{\boldsymbol{h}}(f)$ et d'une matrice $\hat{R}$ de corrélation du bruit et des interférences, à partir d'au moins une partie correspondant à une séquence d'apprentissage dudit signal multivoies synchronisé,
• transposition dans le domaine fréquentiel (404) d'au moins une partie correspondant à une séquence de données utiles du signal multivoies synchronisé, et filtrage (405) par le vecteur w(f), avec

$$w(f) = \frac{\hat{R}^{-1}\hat{\boldsymbol{h}}(f)}{1 + \hat{\boldsymbol{h}}(f)^{H}\hat{R}^{-1}\hat{\boldsymbol{h}}(f)},$$

le signal résultant dudit filtrage étant un signal monovoie dans le domaine fréquentiel, et
• transposition (406) dans le domaine temporel dudit signal monovoie.

**Patentansprüche**

1. Verfahren zum entstörten Empfangen und Abgleichen eines Signals in einem Mehrwege-Empfänger, wobei das Signal mindestens eine Lernsequenz (101) enthält, gebildet aus bekannten Symbolen und mindestens eine Nutzdatensequenz (102), gebildet aus unbekannten Symbolen, wobei das Verfahren sich **dadurch kennzeichnet, dass** es folgende Schritte beinhaltet:

• Empfangen des Signals in einer Vielzahl von Wegen des Empfängers, Transponieren und Diskretisieren (401, 111, 121, 112, 122) des Mehrwege-Signals in ein diskretisiertes Basisband-Gleichwert-Mehrwege-Signal,
• Synchronisieren (402, 140) des diskretisierten Basisband-Mehrwege-Signals,
• Berechnen (403, 150) einer Impulsantwort im Frequenzbereich des Mehrwege-Kanals $\hat{\boldsymbol{h}}(f)$ und einer Korrelationsmatrix $\hat{\boldsymbol{R}}$ des Geräuschs und der Störungen anhand mindestens eines Abschnittes, welcher einer Lernsequenz des synchronisierten Mehrwege-Signals entspricht,
• Transponieren in den Frequenzbereich (404, 231) mindestens eines Abschnittes, welcher einer Nutzdatensequenz des synchronisierten Mehrwege-Signals entspricht, und Filtern (405, 232) durch den Vektor $\boldsymbol{w}(f)$, wobei

$$w(f) = \frac{\hat{R}^{-1}\hat{\boldsymbol{h}}(f)}{1 + \hat{\boldsymbol{h}}(f)^{H}\hat{R}^{-1}\hat{\boldsymbol{h}}(f)},$$

wobei das aus der Filterung resultierende Signal ein Einweg-Signal im Frequenzbereich ist, und
• Transponieren (406, 233) in den Zeitbereich des Einweg-Signals.

2. Verfahren zum entstörten Empfangen und Abgleichen nach Anspruch 1, bei welchem das Berechnen der Impulsantwort im Frequenzbereich des Mehrwege-Kanals $\hat{\boldsymbol{h}}(f)$ folgende Schritte beinhaltet:

• Berechnen einer Interkorrelations-Matrix $\hat{R}_{DX}$ zwischen der Lernsequenz und einem Teil, welcher der Lernsequenz des synchronisierten Mehrwege-Signals entspricht,
• Berechnen einer Autokorrelations-Matrix $\hat{R}_{XX}$ desjenigen Abschnittes, welcher einer Lernsequenz des synchronisierten Mehrwege-Signals entspricht,
• Berechnen einer Mehrsensoren-Kanal-Matrix $\hat{H}$ anhand der Matrix $\hat{R}_{DX}$ und einer Autokorrelations-Matrix $R_{DD}$ der Lernsequenz:
$\hat{H} = \hat{R}_{DX}{}^{\overline{H}}R_{DD}{}^{-1}$, wobei $^{H}$ der transponierte und konjugierte Operator ist, und

• Berechnen der Impulsantwort im Frequenzbereich des Mehrwege-Kanals $\hat{\boldsymbol{h}}(f)$ für jeden Weg des Empfängers, mittels Fourier-Transformation an Vektoren $\hat{h}_k(n)$, welche die Spalten der Matrix $\hat{H}$ bilden.

3. Verfahren zum entstörten Empfangen und Abgleichen nach Anspruch 2, bei welchem die Korrelationsmatrix $\hat{R}$ des Geräuschs und der Störungen anhand folgender Formel erzielt wird:

$$\hat{R} = \hat{R}_{XX} - \hat{H}\hat{R}_{DX}.$$

4. Verfahren zum entstörten Empfangen und Abgleichen nach einem der Ansprüche 2 und 3, bei welchem die Matrizes $R_{DD}$, $\hat{R}_{DX}$ und $\hat{R}_{XX}$ anhand folgender Formeln berechnet werden:

$$R_{DD} = \frac{1}{P - L + 1} \sum_{n=L-1}^{P-1} \boldsymbol{d}(n)\boldsymbol{d}(n)^H,$$

$$\hat{R}_{DX} = \frac{1}{P - L + 1} \sum_{n=L-1}^{P-1} \boldsymbol{d}(n)\boldsymbol{x}(n)^H,$$

$$\hat{R}_{XX} = \frac{1}{P - L + 1} \sum_{n=L-1}^{P-1} \boldsymbol{x}(n)\boldsymbol{x}(n)^H,$$

wobei

- $\boldsymbol{d}(n)$ ein Vektor ist, der anhand der Symbole einer Lernsequenz gebildet wird,
- $\boldsymbol{x}(n)$ ein Vektor ist, der anhand der in einem Teil, welcher der Lernsequenz $\boldsymbol{d}(n)$ des synchronisierten Mehrwege-Signals entspricht, empfangenen Symbole gebildet wird,
- $P$ die Anzahl der Symbole der Lernsequenz $\boldsymbol{d}(n)$ ist,
- $L$ die Länge eines Abgleichfensters ist.

5. Verfahren zum entstörten Empfangen und Abgleichen nach Anspruch 1, bei welchem das Berechnen der Impulsantwort im Frequenzbereich des Mehrwege-Kanals $\hat{\boldsymbol{h}}(f)$ folgende Schritte beinhaltet:

• Schätzen der zeitlichen Impulsantwort des Propagationskanals $\hat{h}_k(n)$ für jeden Weg $k$ des Empfängers, anhand mindestens einer Lernsequenz und mindestens eines Abschnittes, welcher der oder den Lernsequenz(en) des synchronisierten Mehrwege-Signals entspricht, welche in den Frequenzbereich transponiert wurde(n),
• Reduzieren des Geräuschs der zeitlichen Impulsantworten des Propagationskanals $\hat{h}_k(n)$ für jeden Weg $k$ des Empfängers, durch Rücksetzen auf null der mit Positionen , für welche das Signal nicht abgeglichen werden kann, verbundenen Werte von $\hat{h}_k(n)$,
• Berechnen der Vektoren $\hat{\boldsymbol{h}}(f)$ durch Frequenzinterpolation der $\hat{h}_k(n)$

6. Verfahren zum entstörten Empfangen und Abgleichen nach Anspruch 5, bei welchem das Berechnen der Korrelationsmatrix $\hat{\boldsymbol{R}}$ des Geräuschs und der Störungen folgende Schritte beinhaltet:

• Ermitteln, in den geschätzten zeitlichen Impulsantworten $\hat{h}_k(n)$, der Positionen $I_b$ der Abtastwerte, welche Geräusch entsprechen, und Erzeugen von Vektoren $\hat{b}_k(n) = \hat{h}_k(n)$ von $n$, enthalten in $I_b$,
• Berechnen der Vektoren $\hat{\boldsymbol{b}}(n)$ anhand der $\hat{b}_k(n)$, und
• Berechnen der Matrix $\hat{R}$ :

$$\hat{R} = \sum_{n \in I_b} \widehat{\boldsymbol{b}}(n)\widehat{\boldsymbol{b}}(n)^H.$$

**7.** Verfahren zum entstörten Empfangen und Abgleichen eines Signals nach Anspruch 5, wobei das Signal eine Vielzahl von Lernsequenzen beinhaltet, bei welchem die Ermittlung der zeitlichen Impulsantwort für jeden Weg $k$ des Mehrwege-Empfängers für $N_{TS}$ Lernsequenzen durchgeführt wird, wobei $\hat{h}_{k,i}(n)$ die geschätzte zeitliche Impulsantwort für den Weg $k$ anhand der Lernsequenz $i$ bezeichnet, und wobei die Berechnung der Korrelationsmatrix $\hat{R}$ des Geräuschs und der Störungen folgende Schritte beinhaltet:

• Ermitteln, in den geschätzten zeitlichen Impulsantworten $\hat{h}_{k,i}(n)$, der Positionen $I_u$ der Abtastwerte, welche Nutzsignal entsprechen, und der Positionen $I_b$ der Abtastwerte, welche Geräusch entsprechen und Erzeugen der Vektoren $\hat{u}_{k,i}(n) = \hat{h}_{k,i}(n)$ von $n$, enthalten in $I_u$, und der Vektoren $\hat{b}_{k,i}(n) = \hat{h}_{k,i}(n)$ von $n$, enthalten in $I_b$,
• Berechnen der Nutzsignal-Vektoren $\widehat{\boldsymbol{u}}_i(n)$ anhand der $\hat{u}_{k,i}(n)$ und der Geräusch-Vektoren $\widehat{\boldsymbol{b}}_i(n)$ anhand der $\hat{b}_{k,i}(n)$,
• Schätzen einer Korrelationsmatrix $\hat{R}_{XX}$ des Gesamtsignals, wobei

$$\hat{R}_{XX} = \frac{1}{N_{TS}} \sum_{i=O}^{N_{TS}-1} \left( \sum_{n \in I_u} \widehat{\boldsymbol{u}}_i(n)\widehat{\boldsymbol{u}}_i(n)^H + \sum_{n \in I_b} \widehat{\boldsymbol{b}}_i(n)\widehat{\boldsymbol{b}}_i(n)^H \right)$$

• Schätzen des mittleren Nutzsignal-Vektors:

$$\widehat{\boldsymbol{u}}_m(n) = \frac{1}{N_{TS}} \sum_{i=O}^{N_{TS}-1} \widehat{\boldsymbol{u}}_i(n),$$

• Schätzen einer Korrelationsmatrix $\hat{R}_{SS}$ des empfangenen Nutzsignals:

$$\hat{R}_{SS} = \sum_{n \in I_u} \widehat{\boldsymbol{u}}_m(n)\widehat{\boldsymbol{u}}_m(n)^H,$$

• Berechnen der Matrix $\hat{R}$ :

$$\hat{R} = \frac{1}{L_{TS}} \left( \hat{R}_{XX} - \hat{R}_{SS} \right).$$

**8.** Mehrwege-Empfänger (110) zum entstörten Empfangen und Abgleichen eines Signals, beinhaltend mindestens eine Lernsequenz (101), gebildet aus bekannten Symbolen und mindestens eine Nutzdatensequenz (102), gebildet aus unbekannten Symbolen, wobei der Empfänger konfiguriert ist, um den Empfang des Signals auf jedem seiner Wege zu bewerkstelligen, das Mehrwege-Signal in ein diskretisiertes Basisband-Gleichwert-Mehrwege-Signal (401) zu transponieren und zu diskretisieren, und **dadurch gekennzeichnet, dass** er mindestens eine Ausrüstung (130) zur Verarbeitung des Signals besitzt, konfiguriert zum Umsetzen des Verfahrens zum entstörten Empfangen und Abgleichen, indem sie folgende Schritte ausführt:

• Synchronisieren (402) des diskretisierten Basisband-Mehrwege-Signals,
• Berechnen (403) einer Impulsantwort in dem Frequenzbereich des Mehrwege-Kanals $\hat{h}(f)$ und einer Korrelationsmatrix $\hat{R}$ des Geräuschs und der Störungen anhand mindestens eines Abschnittes, welcher einer Lernsequenz des synchronisierten Mehrwege-Signals entspricht,
• Transponieren in den Frequenzbereich (404) mindestens eines Abschnittes, welcher einer Nutzdatensequenz des synchronisierten Mehrwege-Signals entspricht, und Filtern (405) durch den Vektor w(f), wobei

$$w(f) = \frac{\widehat{R}^{-1}\widehat{\boldsymbol{h}}(f)}{1 + \widehat{\boldsymbol{h}}(f)^H \widehat{R}^{-1}\widehat{\boldsymbol{h}}(f)},$$

wobei das aus der Filterung resultierende Signal ein Einweg-Signal im Frequenzbereich ist, und
• Transponieren (406) des Einweg-Signals in den Zeitbereich.

**Claims**

1. Method for receiving and carrying out anti-jamming equalization on a signal in a multi-reception-channel receiver, said signal comprising at least one learning sequence (101) formed from known symbols and at least one sequence (102) of useful data, which sequence is formed from unknown symbols, the method being **characterized in that** it comprises the steps of:

   • receiving said signal in a plurality of reception channels of the receiver, and transposing and discretizing (401, 111, 121, 112, 122) the multi-reception-channel signal into a discretized baseband equivalent multi-reception-channel signal,
   • synchronizing (402, 140) the discretized baseband multi-reception-channel signal,
   • calculating (403, 150) an impulse response in the frequency domain of the multi-reception-channel propagation channel $\widehat{\boldsymbol{h}}(f)$ and a correlation matrix $\widehat{R}$ of the noise and interference, from at least one portion corresponding to a learning sequence of said synchronized multi-reception-channel signal,
   • transposing (404, 231) to the frequency domain at least one portion corresponding to a sequence of useful data of the synchronized multi-reception-channel signal, and filtering (405, 232) with the vector $\boldsymbol{w}(f)$, where

$$w(f) = \frac{\widehat{R}^{-1}\widehat{\boldsymbol{h}}(f)}{1 + \widehat{\boldsymbol{h}}(f)^H \widehat{R}^{-1}\widehat{\boldsymbol{h}}(f)},$$

   the signal resulting from said filtering being a single-reception-channel signal in the frequency domain, and
   • transposing (406, 233) said single-reception-channel signal to the time domain.

2. Method for receiving and carrying out anti-jamming equalization according to Claim 1, wherein the calculation of the impulse response in the frequency domain of the multi-reception-channel propagation channel $\widehat{\boldsymbol{h}}(f)$ comprises the steps of:

   • calculating a matrix $\widehat{R}_{DX}$ expressing the intercorrelation between a learning sequence and a portion corresponding to said learning sequence of the synchronized multi-reception-channel signal,
   • calculating an autocorrelation matrix $\widehat{R}_{XX}$ of said portion corresponding to a learning sequence of said synchronized multi-reception-channel signal,
   • calculating a multi-sensor propagation channel matrix $\widehat{H}$ from the matrix $\widehat{R}_{DX}$ and from an autocorrelation matrix $R_{DD}$ of said learning sequence:
   $\widehat{H} = \widehat{R}_{DX}{}^H R_{DD}{}^{-1}$, where $H$ is the conjugate-transpose operator, and
   • calculating the impulse response in the frequency domain of the multi-reception-channel propagation channel $\widehat{\boldsymbol{h}}(f)$ for each reception channel of the receiver, by Fourier transformation of the vectors $\widehat{h}_k(n)$ forming the columns of the matrix $H$.

3. Method for receiving and carrying out equalization according to Claim 2, wherein the correlation matrix $\widehat{R}$ of the noise and interference is obtained using the formula:

$$\widehat{R} = \widehat{R}_{XX} - \widehat{H}\widehat{R}_{DX}.$$

4. Method for receiving and carrying out anti-jamming equalization according to one of Claims 2 and 3, wherein said matrices $R_{DD}$, $\widehat{R}_{DX}$ and $\widehat{R}_{XX}$ are calculated using the following formulae:

$$R_{DD} = \frac{1}{P - L + 1} \sum_{n=L-1}^{P-1} \boldsymbol{d}(n)\boldsymbol{d}(n)^H,$$

$$\hat{R}_{DX} = \frac{1}{P - L + 1} \sum_{n=L-1}^{P-1} \boldsymbol{d}(n)\boldsymbol{x}(n)^H,$$

$$\hat{R}_{XX} = \frac{1}{P - L + 1} \sum_{n=L-1}^{P-1} \boldsymbol{x}(n)\boldsymbol{x}(n)^H,$$

where

- $\boldsymbol{d}(n)$ is a vector formed from the symbols of a learning sequence,
- $\boldsymbol{x}(n)$ is a vector formed from the symbols received in a portion corresponding to the learning sequence $\boldsymbol{d}(n)$ of said synchronized multi-reception-channel signal,
- $P$ is the number of symbols in said learning sequence $\boldsymbol{d}(n)$, and
- $L$ is a length of an equalization window.

5. Method for receiving and carrying out anti-jamming equalization according to Claim 1, wherein the calculation of the impulse response in the frequency domain of the multi-reception-channel propagation channel $\hat{\boldsymbol{h}}(f)$ comprises the steps of:

• estimating the time impulse response of the propagation channel $\hat{h}_k(n)$ for each reception channel $k$ of the receiver, from at least one learning sequence and at least one portion corresponding to said one or more frequency-domain-transposed learning sequences of the synchronized multi-reception-channel signal,
• decreasing the noise in the time impulse responses of the propagation channel $\hat{h}_k(n)$ for each reception channel $k$ of the receiver, by zeroing the values $\hat{h}_k(n)$ associated with positions for which the signal cannot be equalized, and
• calculating vectors $\hat{\boldsymbol{h}}(f)$ by frequency interpolation of the $\hat{h}_k(n)$.

6. Method for receiving and carrying out anti-jamming equalization according to Claim 5, wherein the calculation of the correlation matrix $\hat{R}$ of the noise and interference comprises the steps of:

• determining, in the estimated time impulse responses $\hat{h}_k(n)$, the positions $I_b$ of samples corresponding to noise, and generating vectors $\hat{b}_k(n) = \hat{h}_k(n)$ for $n$ belonging to $I_b$,
• calculating noise vectors $\hat{\boldsymbol{b}}(n)$ from the $\hat{b}_k(n)$, and
• calculating the matrix $\hat{R}$:

$$\hat{R} = \sum_{n \in I_b} \hat{\boldsymbol{b}}(n)\hat{\boldsymbol{b}}(n)^H.$$

7. Method for receiving and carrying out anti-jamming equalization according to Claim 5, the signal comprising a plurality of learning sequences, wherein said step of determining the time impulse response for each reception channel $k$ of the multi-reception-channel receiver is carried out for $N_{TS}$ learning sequences, $\hat{h}_{k,i}(n)$ designating the time impulse response estimated for the reception channel $k$ from the learning sequence i, and wherein the calculation of the correlation matrix $\hat{R}$ of the noise and interference comprises the steps of:

• determining, in the estimated time impulse responses $\hat{h}_{k,i}(n)$, the positions $I_u$ of samples corresponding to the useful signal, and the positions $I_b$ of samples corresponding to noise, and generating vectors $\hat{u}_{k,i}(n) = \hat{h}_{k,i}(n)$ for $n$ belonging to $I_u$, and vectors $\hat{b}_{k,i}(n) = \hat{h}_{k,i}(n)$ for $n$ belonging to $I_b$,
• calculating useful-signal vectors $\hat{\boldsymbol{u}}_i(n)$ from the $\hat{u}_{k,i}(n)$, and noise vectors $\hat{\boldsymbol{b}}_i(n)$ from the $\hat{b}_{k,i}(n)$,

• estimating a correlation matrix $\hat{R}_{XX}$ of the total signal total, where

$$\hat{R}_{XX} = \frac{1}{N_{TS}} \sum_{i=0}^{N_{TS}-1} \left( \sum_{n \in I_u} \widehat{\boldsymbol{u}}_i(n) \widehat{\boldsymbol{u}}_i(n)^H + \sum_{n \in I_b} \widehat{\boldsymbol{b}}_i(n) \widehat{\boldsymbol{b}}_i(n)^H \right)$$

• estimating the average useful-signal vector:

$$\widehat{\boldsymbol{u}}_{\boldsymbol{m}}(n) = \frac{1}{N_{TS}} \sum_{i=0}^{N_{TS}-1} \widehat{\boldsymbol{u}}_i(n) \, ;$$

• estimating a correlation matrix $\hat{R}_{SS}$ of the received useful signal:

$$\hat{R}_{SS} = \sum_{n \in I_u} \widehat{\boldsymbol{u}}_{\boldsymbol{m}}(n) \widehat{\boldsymbol{u}}_{\boldsymbol{m}}(n)^H \, ;$$

• and calculating the matrix $\hat{R}$:

$$\hat{R} = \frac{1}{L_{TS}} \left( \hat{R}_{XX} - \hat{R}_{SS} \right).$$

8. Multi-reception-channel receiver (110) allowing reception and anti-jamming equalization of a signal comprising at least one learning sequence (101) formed from known symbols and at least one sequence (102) of useful data, which sequence is formed from unknown symbols, said receiver being configured to receive the signal in each of its reception channels, and to transpose and discretize the multi-reception-channel signal into a discretized baseband equivalent multi-reception-channel signal (401) and being **characterized in that** it comprises at least one piece of equipment (130) for processing the signal, which is configured to implement a method for receiving and carrying out anti-jamming equalization by executing steps of:

• synchronizing (402) the discretized baseband multi-reception-channel signal,
• calculating (403) an impulse response in the frequency domain of the multi-reception-channel propagation channel $\hat{\boldsymbol{h}}(f)$ and a correlation matrix $\hat{R}$ of the noise and interference, from at least one portion corresponding to a learning sequence of said synchronized multi-reception-channel signal,
• transposing (404) to the frequency domain at least one portion corresponding to a sequence of useful data or of the synchronized multi-reception-channel signal, and filtering (405) with the vector $\boldsymbol{w}(f)$, where

$$\boldsymbol{w}(f) = \frac{\hat{R}^{-1}\widehat{\boldsymbol{h}}(f)}{1 + \widehat{\boldsymbol{h}}(f)^H \hat{R}^{-1}\widehat{\boldsymbol{h}}(f)},$$

the signal resulting from said filtering being a single-reception-channel signal in the frequency domain, and
• transposing (406) said single-reception-channel signal to the time domain.

100

P     N

101     102     101

Art antérieur

# Fig. 1a

110

112  111

121     130

| Chaine radio |
| Chaine radio |

| Synchronisation | Egalisation multivoies | Décodage |

122     140     150     160

# Fig. 1b

Fig. 2a

Fig. 2b

# Fig. 2c

# Fig. 2d

## Fig. 3a

## Fig. 3b

| Réception et conversion bande de base | — 401 |

| Synchronisation | — 402 |

| Calcul d'une réponse impulsionnelle par voie et d'une matrice de corrélation du bruit et des interférences | — 403 |

| Transposition dans le domaine fréquentiel | — 404 |

| Filtrage spatio-fréquentiel | — 405 |

| Transposition du signal dans le domaine temporel | — 406 |

Fig. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0669729 B1
- EP 0867079 B1
- WO 9708849 A
- FR 2758926
- EP 0665665 B1

**Littérature non-brevet citée dans la description**

- **B.MUQUET et al.** Cyclic Prefixing or Zero Padding for Wireless Multicarrier Transmissions. *IEEE Transactions Communications,* Décembre 2002, vol. 50